Europäisches Patentamt

European Patent Office

Office européen des brevets

(19)

(11) EP 0 564 318 B1

(12) **FASCICULE DE BREVET EUROPEEN**

(45) Date de publication et mention
de la délivrance du brevet:
**01.12.1999 Bulletin 1999/48**

(51) Int Cl.6: **G06T 17/00**

(21) Numéro de dépôt: **93400699.0**

(22) Date de dépôt: **18.03.1993**

(54) **Dispositif de traitement d'informations d'images tridimensionnelles, avec extraction de lignes remarquables**

Vorrichtung zum Bearbeiten von dreidimensionalen Bildinformationen mit Hervorhebung von herausstechenden Linien

Device for processing three-dimensional image information with extraction of remarkable lines

(84) Etats contractants désignés:
**DE GB**

(30) Priorité: **31.03.1992 FR 9203900**

(43) Date de publication de la demande:
**06.10.1993 Bulletin 1993/40**

(73) Titulaire: **INRIA INSTITUT NATIONAL DE RECHERCHE EN INFORMATIQUE ET EN AUTOMATIQUE Rocquencourt F-78153 Le Chesnay (FR)**

(72) Inventeurs:
 • **Thirion, Jean-Philippe**
 **F-75012 Paris (FR)**

 • **Ayache, Nicholas**
 **F-75015 Paris (FR)**
 • **Monga, Olivier**
 **F-75019 Paris (FR)**
 • **Gourdon, Alexis**
 **F-75015 Paris (FR)**

(74) Mandataire: **Plaçais, Jean-Yves et al Cabinet Netter, 40, rue Vignon 75009 Paris (FR)**

(56) Documents cités:
EP-A- 0 204 225          EP-A- 0 390 640
US-A- 4 879 668          US-A- 5 027 422

**Description**

L'invention concerne le traitement d'images numériques tridimensionnelles. Elle s'applique en particulier, mais non exclusivement, à des images dites médicales.

En matière médicale, les appareils modernes tels que les scanners à rayons X ou les appareils de résonance magnétique nucléaire fournissent des informations numériques de mesure rapportées à des points de l'espace tridimensionnel. Il y a donc trois coordonnées pour définir le point de l'espace, plus la grandeur mesurée, attachée à ce point . on appelle ici "image tridimensionnelle" toute représentation numérique d'un jeu de grandeurs mesurées ou calculées ("valeur"), rapportées respectivement à un ensemble de points de l'espace.

Le traitement des images tridimensionnelles est particulièrement délicat, en particulier dès que l'homme doit intervenir. Par exemple, la visualisation d'une image tridimensionnelle sur un écran (bidimensionnel) ne peut se faire de façon immédiate : si l'on affiche sur cet écran tous les points de l'image en perspective, avec représentation de leur "valeur", le résultat sur l'écran sera parfaitement indéchiffrable.

Le plus simple est alors de considérer seulement une coupe de l'image, c'est-à-dire un sous-ensemble bidimensionnel de celle-ci. Mais il est clair qu'une coupe comporte beaucoup moins d'informations utiles que l'ensemble de l'image tridimensionnelle. Même en utilisant de nombreuses coupes, on ne retrouve pas toutes ces informations utiles, et encore moins leurs relations.

Un moyen connu consiste à rechercher dans l'image tridimensionnelle des surfaces dites "d'iso-intensité" (plus brièvement "iso-surfaces"). Ces iso-surfaces sont l'analogue dans le cas des images tridimensionnelles des lignes de niveau pour le cas des images bidimensionnelles (où l'altitude est considérée comme "valeur" en chaque point).

Une iso-surface est définie par rapport à un seuil choisi, appliqué à ladite "valeur" mesurée. Le seuil est appelé "iso-valeur". L'iso-surface est la surface qui sépare :

-    les régions de l'espace pour lesquelles la valeur mesurée est inférieure ou égale au seuil, et
-    les régions pour lesquelles la valeur mesurée est strictement supérieure au seuil.

En théorie, la détermination d'une iso-surface supposerait que l'on connaisse une fonction continue capable d'associer à tout point de l'espace la valeur mesurée.

En pratique, on ne dispose que d'une image numérique définie par échantillonnage pour un nombre limité de points de l'espace. Une fonction d'interpolation permet de calculer la "valeur" pour des points situés entre deux points échantillonnés.

L'homme du métier sait que les iso-surfaces possèdent des propriétés topologiques spécifiques : elles sont continues, sans trou, et ne s'intersectent pas elles-mêmes.

Concrètement, l'article "Marching Cubes : A high resolution 3D surface reconstruction algorithm", William E. LORENSEN et Harvey E. CLINE, Computer Graphics, volume 31, N° 4, Juillet 1987, décrit une technique d'extraction des iso-surfaces d'une image tridimensionnelle. Cette technique a été mise en oeuvre dans la demande EP-A-204 225, qui divulgue les caractéristiques du préambule de la revendication 1.

L'usage de cette technique a permis des progrès significatifs, en particulier dans le traitement des images médicales. Cependant, cette technique souffre de différents inconvénients. L'un d'entre eux est le fait que les surfaces obtenues présentent le plus souvent des trous, ce sur quoi on reviendra plus loin; un autre inconvénient est précisément le fait que cette technique ne permet d'extraire que des surfaces ("iso-surfaces").

La présente invention vient améliorer la situation dans ce domaine du traitement d'images, en particulier d'images médicales; elle est définie dans la revendication 1.

Un premier but de l'invention est d'abord de permettre l'extraction non seulement de surfaces (sans trous) mais aussi de lignes remarquables, telles que des "bi-iso-lignes". Une bi-iso-ligne est la ligne d'intersection de deux iso-surfaces, définies à partir de deux images différentes, ou plus généralement par deux fonctions continues différentes FI et F2 de l'espace tridimensionnel, rapportées à une ou plusieurs images.

Un autre but de l'invention est d'obtenir une représentation des bi-iso-lignes, à partir d'un maillage polyédrique de l'espace tridimensionnel qui n'est pas nécessairement parallélipipédique, mais peut être quelconque (maillage de type "éléments finis").

Encore un autre but de l'invention est de permettre de déterminer des caractéristiques différentielles des iso-surfaces d'une image tridimensionnelle.

L'invention a également pour but de permettre la détermination de lignes remarquables telles que les bi-iso-lignes avec un maillage polyédrique particulier, notamment le maillage constitué d'une grille régulière de cubes élémentaires identiques, ou celui constitué de tétraèdres complémentaires.

L'invention a également pour but, à partir d'une image numérique tridimensionnelle donnée, de calculer des lignes remarquables de celle-ci qui dépendent des caractéristiques différentielles des iso-surfaces qu'elle contient.

L'invention a aussi pour but remarquable de permettre la mesure dans une image tridimensionnelle d'un coefficient d'extrêmalité, qui caractérise les lignes de crête des iso-surfaces, et sera défini en détail plus loin.

L'invention permet bien entendu d'extraire des iso-surfaces d'une image numérique tridimensionnelle. Elle présente à cet égard deux avantages. D'une part, elle permet de travailler à partir d'un maillage polyédrique quelconque de l'espace (et non nécessairement à partir d'une grille de cubes identiques, comme dans l'état de la technique). D'autre part, les moyens connus présentent l'inconvénient de fournir des iso-surfaces dans lesquelles existent des trous, inconvénient qui est surmonté par la technique de la présente invention, (hormis naturellement les bords de l'image).

Selon une définition générale de l'invention, il est proposé un dispositif électronique pour le traitement d'informations d'image, qui comprend :

- des moyens de définition d'image propres à fournir, en correspondance d'un maillage polyédrique prédéterminé d'une portion de l'espace, une valeur numérique pour chaque sommet du maillage,
- des moyens de traitement de polygone, aptes à recevoir une représentation d'un polygone plan (F) à p sommets, p valeurs respectives pour ces p sommets, et un seuil (S), et à fournir, en correspondance du polygone F, une liste de segments orientés reliant des points des arêtes du polygone interpolés comme égaux au seuil, avec une convention de sens prédéterminée,
- des moyens de traitement de polyèdre aptes à recevoir une représentation d'un polyèdre avec les valeurs en ses sommets et un seuil, puis à solliciter les moyens de traitement de polygone pour toutes les faces du polyèdre, ce qui fournit une liste de segments orientés, puis à associer au polyèdre une liste de cycles fermés et orientés, constitués de segments de ladite liste de segments, et
- des moyens de traitement principaux aptes à présenter séquentiellement une pluralité de polyèdres dudit maillage aux moyens de traitement de polyèdre, avec les valeurs associées à leurs sommets et un seuil.

Les cycles ainsi obtenus appartiennent à une iso-surface de l'image pour ladite valeur de seuil.

Des variantes intéressantes sont proposées dans le cas de mailles dites cubiques ou tétraédriques.

Avantageusement, on y ajoute des moyens pour commander l'exploration maille par maille des polyèdres de ladite portion d'espace par les moyens de traitement principaux, soit à volonté, soit en suivant une ligne d'intersection de deux iso-surfaces.

De préférence, les moyens de traitement principaux sont aptes à recevoir deux jeux de valeurs pour les points de ladite portion d'espace, ainsi que deux seuils ou iso-valeurs, et à déterminer des lignes caractéristiques par intersection des deux iso-surfaces correspondantes. Il est particulièrement intéressant que le second jeu de valeurs soit constitué de grandeurs différentielles relatives au premier jeu de valeurs.

Une application intéressante est alors le recalage d'une image par rapport à une autre, en vue de leur comparaison.

D'autres caractéristiques et avantages de l'invention apparaîtront à l'examen de la description détaillée qui va suivre, ainsi que des dessins annexés, sur lesquels :

- la figure 1 illustre le schéma de principe d'un dispositif de visualisation d'une image tridimensionnelle;

- la figure 2 illustre le schéma de principe d'un dispositif permettant le rapprochement de deux images tridimensionnelles relatives au même objet mais prises différemment;

- les figures 3A à 3C illustrent un exemple de maillage polyédrique de l'espace;

- la figure 4 illustre un automate, dit ARETE_POINT(), et la figure 4A est un dessin illustratif de celui-ci;

- la figure 5 illustre un automate, dit SEGMENTS_CYCLE(), et la figure 5A est un dessin illustratif de celui-ci;

- la figure 6 illustre un automate, dit SEGMENTS_POLYGONE(), et la figure 6A est un dessin illustratif de celui-ci;

- la figure 7 illustre un automate, dit CYCLES_POLYEDRE(), et la figure 7A est un dessin illustratif de celui-ci;

- la figure 8 est un schéma de principe d'un premier mode de réalisation de l'invention;

- la figure 8A est une variante de la figure 8;

- la figure 9 illustre un automate, dit INTER_DECALE();

- la figure 10 illustre un automate, dit INTER_SEGMENTS();

- la figure 11 illustre un automate, dit INTER_CYCLES();

- la figure 12 illustre un automate, dit SEGMENTS_POLYEDRES();

- la figure 12A est une variante de l'automate de la figure 12;

- la figure 12B est un dessin comparable à la figure 7A, mais obtenu avec l'automate de la figure 12A;

- la figure 13 illustre un automate, dit SCAN_MAILLES();

- la figure 14 illustre un automate, dit MARCHE_LIGNES();

- la figure 15 illustre un automate, dit MARCHE_LIGNE();

- la figure 16 illustre un automate, dit MARCHE_UNI_LIGNE();

- la figure 17 est un schéma de principe d'un second mode de réalisation de l'invention, adapté au cas d'une grille régulière (un seul type de polyèdre, parallélipipédique) ;

- les figures 17A, 18A et 18B sont des dessins utiles à la compréhension de la figure 17;

- la figure 19 est un schéma de principe d'un troisième mode de réalisation de l'invention, tandis que la figure 19A illustre un maillage tétraédrique;

- les figures 20A et 20B sont des dessins utiles à la compréhension de la figure 17;

- la figure 21 illustre un automate, dit EXTRAIT_COURBURES();

- la figure 22 illustre un exemple de mécanisme de recalage d'images, en correspondance de la figure 2;

- la figure 23 illustre un exemple de mécanisme de rééchantillonnage d'image utilisable dans le mécanisme de recalage d'images de la figure 22;

- les figures 24 et 25 sont deux exemples d'images obtenues à l'aide de la présente invention; et

- la figure 26 illustre la comparaison de ces deux images.

Les dessins sont, pour l'essentiel, de caractère certain. En conséquence, ils font partie intégrante de la présente description. Ils pourront donc non seulement servir à mieux faire comprendre l'invention, mais aussi contribuer à la définition de celle-ci.

Par ailleurs, toutes les formules complexes sont reportées en annexe, à la fin de la description. L'annexe 1 (plusieurs pages) donne les formules d'intérêt général. L'annexe 2 définit les formules et la convention de notation des différentielles d'une fonction F définie dans l'espace tridimensionnel. L'annexe 3 définit une structure COURBURES utile à la mise en oeuvre de l'invention.

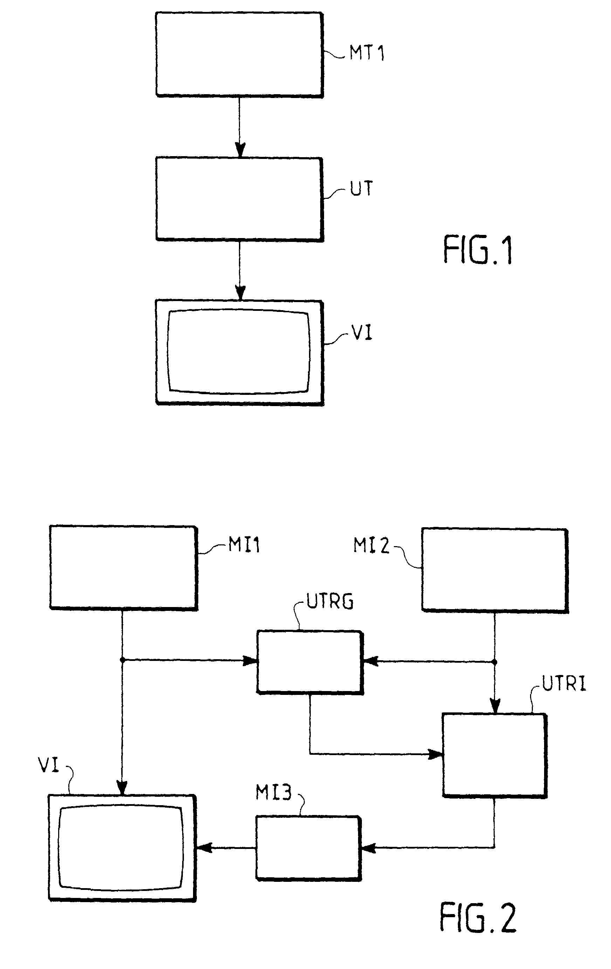

Sur la figure 1, une mémoire d'image MI1 est reliée à une unité de traitement UT, par exemple du genre "station de travail", capable en outre de piloter un dispositif de visualisation VI, tel qu'un moniteur de haute définition.

Sur la figure 2, deux mémoires d'images MI1 et MI2 ont reçu des informations d'images, échantillonnées suivant le même maillage de l'espace, mais relatives à des prises de vue différentes d'un même objet. Une première unité de traitement UTRG va réaliser un recalage géométrique des deux images l'une par rapport à l'autre en utilisant leurs lignes remarquables: il en résulte une transformation géométrique qui permet de passer d'une image à l'autre. Une seconde unité de traitement UTRI reprend la seconde image MI2, pour la rééchantillonner dans le même maillage de l'espace que l'image MI1, compte-tenu de la transformation géométrique donnée par l'unité UTRG. L'image obtenue après rééchantillonnage, directement comparable à l'image MI1, est stockée dans une mémoire MI3. L'unité de visualisation VI peut alors réaliser toute visualisation combinée souhaitée des deux images MI1 et MI3, pour un médecin par exemple.

L'invention sera tout d'abord décrite dans son application la plus générale, en référence à un maillage polyédrique quelconque M d'une portion de l'espace tridimensionnel. On appelle "maille" chacun des polyèdres. Il n'est pas nécessaire qu'il existe un motif répétitif, c'est à dire que le maillage soit régulier. Les polyèdres sont supposés convexes, bien que des polyèdres concaves puissent opérer, au moins dans certains cas.

Dans ce cas général, il est nécessaire de disposer d'un moyen, par exemple une liste en mémoire, définissant chacun des polyèdres convexes constituant le maillage polyédrique de l'espace; il faut y ajouter, pour chaque polyèdre, une définition de chacune des faces du polyèdre.

Par exemple, le maillage polyédrique peut être fourni sous la forme d'un fichier contenant la liste des polyèdres composant le maillage; chaque polyèdre est défini à son tour par une liste de polygones plans qui définissent chacune de ses faces; enfin chaque polygone plan est défini par la liste ordonnée de ses sommets, qui sont des points de coordonnées réelles de l'espace tridimensionnel. Bien entendu, ce moyen de définition du maillage n'est donné qu'à titre d'exemple, d'autres formats pouvant être envisagés.

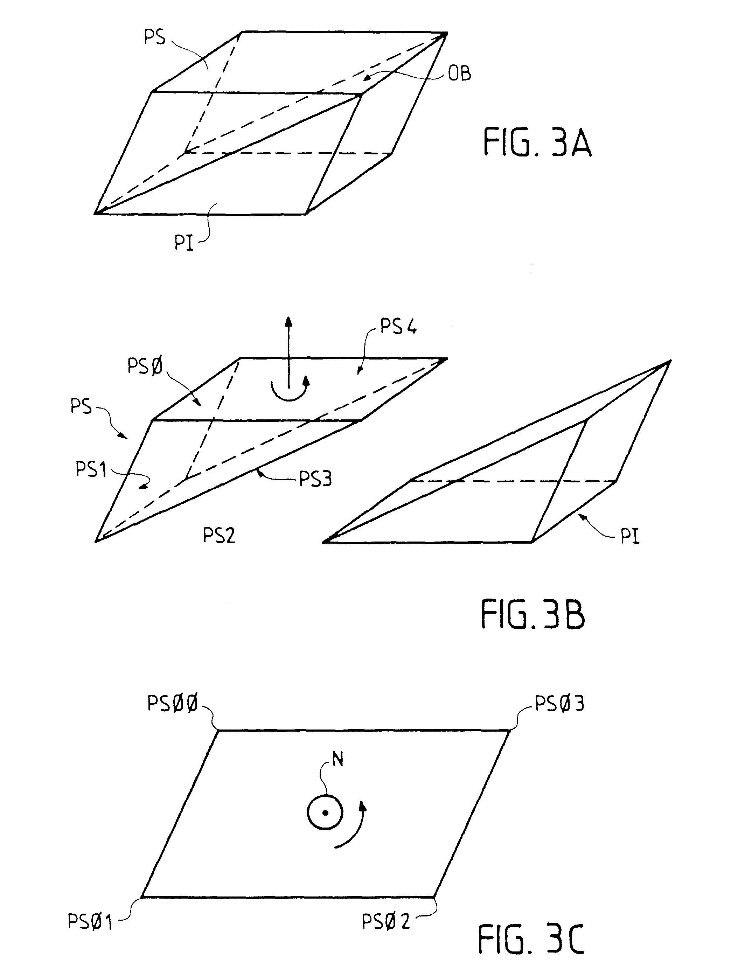

A titre purement illustratif, la figure 3A illustre un maillage très simple, constitué d'un prisme supérieur PS et d'un prisme inférieur PI, joints en un plan oblique OB. La liste des polyèdres comprend deux mailles - ces deux prismes. Chaque prisme (le polyèdre) est défini par une liste ordonnée de ses cinq faces, qui sont des triangles ou des parallélogrammes. Chaque face est définie par la suite de ses points, parcourus par exemple dans le sens donné par la règle du tire-bouchon (bien connue en électro-magnétisme, encore appelée règle de la main droite, ou règle du bonhomme d'Ampère), par rapport à la normale N, orientée vers l'extérieur du polyèdre.

La figure 3B illustre les deux polyèdres séparés. Elle illustre aussi, purement à titre d'exemple, une numérotation des faces du polyèdre supérieur PS. Et la figure 3C illustre un mode de parcours des sommets du parallélogramme supérieur PSO du polyèdre PS.

Chaque noeud du maillage polyédrique est définissable par une représentation numérique de ses coordonnées (X, Y, Z). En ce noeud, on dispose d'une valeur numérique V, tirée d'une mesure, effectuée par exemple à l'aide d'un scanner à rayons X, ou calculée à partir d'une mesure, ou obtenue de toute autre manière sous forme numérique.

Ces informations sont stockées dans la mémoire MI1 de la figure 1, avec la définition complète du maillage polyédrique.

On note généralement S la représentation numérique du seuil ou iso-valeur par rapport auquel seront définies des bi-iso-lignes ou des iso-surfaces.

Dans la suite, on définira des listes ou suites, distinguées par des "noms" différents. Cette notation fait référence à un ensemble chaîné de cellules de mémoire dont chacune contient une valeur et un pointeur vers la cellule suivante, comme cela est connu dans le langage de programmation dit LISP (acronyme de "LISt Processing"). On distinguera ici les listes ouvertes, avec pointeur "NUL" en fin de liste, et les listes fermées ou "cycles" qui rebouclent sur leur point de départ. Les cellules sont allouées dynamiquement en correspondance du "nom" de la liste (par exemple: CYCLE). Bien que la mémoire d'image puisse être utilisée pour cela, il est préférable d'utiliser une mémoire de travail.

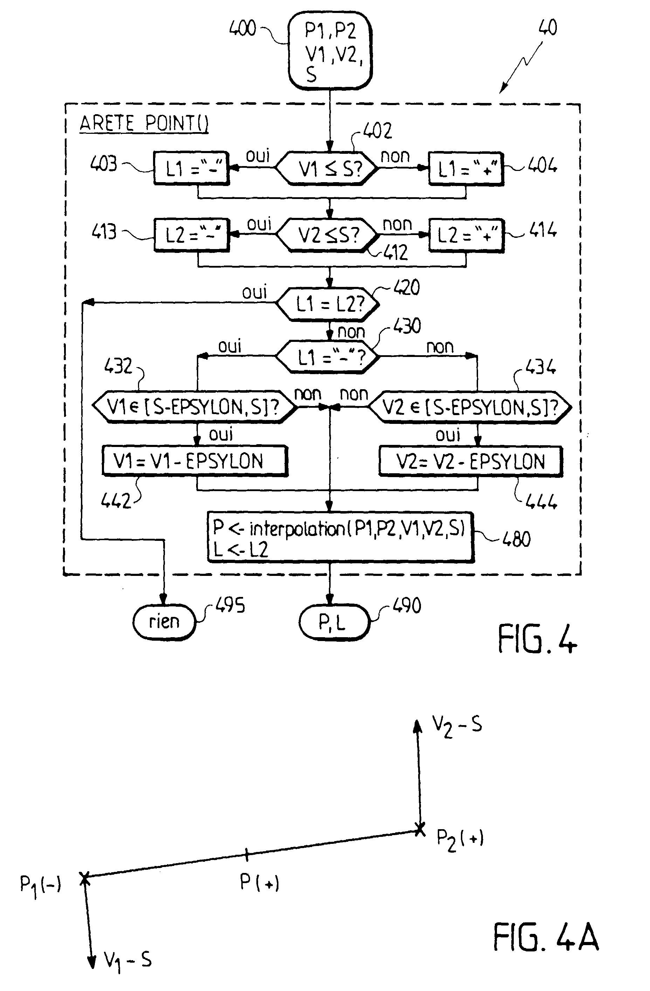

L'invention fait tout d'abord usage d'un premier automate de base 40, dénommé ARETE_POINT(), décrit en référence aux figures 4 et 4A.

Le bloc d'entrée 400 de cet automate reçoit les coordonnées (X, Y, Z) de deux points P1 et P2 de l'espace tridimensionnel, les valeurs V1, V2 associées à ces deux points, ainsi que la valeur de seuil S.

Le test 402 détermine si la valeur V1 est inférieure ou égale au seuil S. Si oui, on crée (403) un signal L1 associé au point P1 et possédant le signe "-". Sinon, on lui donne (404) le signe "+". Ensuite, à partir d'une étape 412, on fait de même avec V2 et le signal L2 aux étapes 413 et 414.

A l'étape 420, si les signaux L1 et L2 sont de même signe, la sortie directe 495 ne donne rien (pas de point intermédiaire du segment P1,P2 qui possède la valeur S). S'ils sont de signes différents, l'étape 430 recherche si L1 possède le signe "-". Si oui, on recherche (432) si V1 est proche de S par valeurs inférieures, dans la limite d'une quantité epsilon, faible. Si L1 a le signe "+", on fait de même à l'étape 434, mais avec la quantité V2.

Si l'une ou l'autre de ces deux quantités est proche du seuil à epsilon près, on la diminue de epsilon, respectivement aux étapes 442 et 444.

Après cela, l'étape 480 réalise une interpolation, sur la base des valeurs V1 et V2, entre les points P1 et P2, par exemple par la formule (XV), annexe 1. On détermine ainsi le point intermédiaire P du segment P1,P2 où la valeur interpolée est égale au seuil S (figure 4A). A la sortie 490, on associe à ce point P un signal L ayant le signe de L2.

L'homme du métier comprendra que la notation des signes par "+" et "-" est illustrative. Elle peut être remplacée par toute autre notation à deux états, comme "0" et "1", par exemple. dans la suite, on parlera de signe ou de "label".

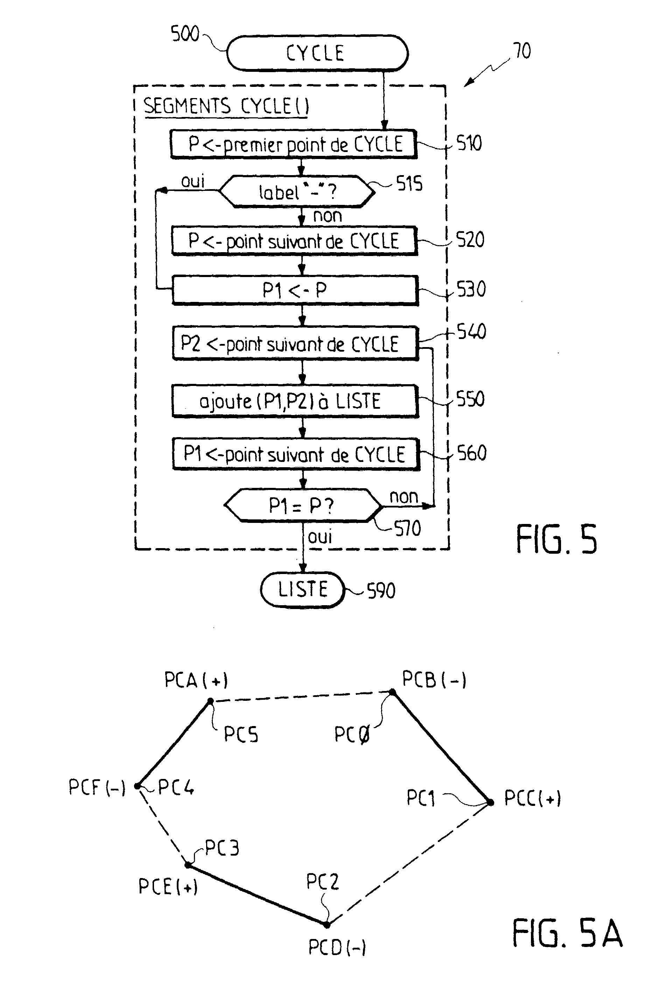

Il est maintenant fait référence aux figures 5 et 5A, qui illustrent un automate 70, dit "SEGMENTS_CYCLE()".

L'entrée 500 de l'automate 70 est un CYCLE, défini de la manière illustrée sur la figure 5A par une suite ordonnée de points (non nécessairement coplanaires), rebouclée sur elle-même. L'homme du métier comprendra que le nombre de points de cette suite est pair, mais inconnu dans le cas général d'un maillage polyédrique quelconque. Ces points sont notés PCA à PCF sur le dessin (pour l'illustration, l'automate n'ayant pas à connaître cette identification des points). Chaque point est muni d'un signe, qui peut être celui précédemment décrit à propos de la figure 4.

L'étape 510 de la figure 5 consiste à examiner le premier point du cycle (PCA) pour tester en 515 si son signe a l'un, prédéterminé, de ses deux états possibles ("-" est choisi à titre d'exemple). Si le signe de ce premier point est "-", il va demeurer le premier point PC0 examiné par cet automate. Sinon, l'étape 520 prend le point suivant (PCB), comme premier point courant P.

A l'étape 530, on part donc d'un premier point courant P (PC0). L'étape 540 examine le point suivant (PC1). L'automate note ces deux points P1 et P2. L'étape 550 consiste à ajouter le segment (P1,P2) à une liste de segments notée LISTE. L'étape 560 considère le point suivant du cycle comme nouveau point P1. Si on est retourné au point de départ P (PC0), la LISTE complète est passée à l'étape de sortie 580. Sinon, le test 570 retourne à l'étape 540, pour compléter la LISTE.

L'effet de ce mécanisme, illustré sur la figure 5A, est de transformer un cycle fermé de points en une liste de segments ayant chacun pour origine un point dont le signe est "-" (par exemple) et pour extrémité un point possédant l'autre signe "+".

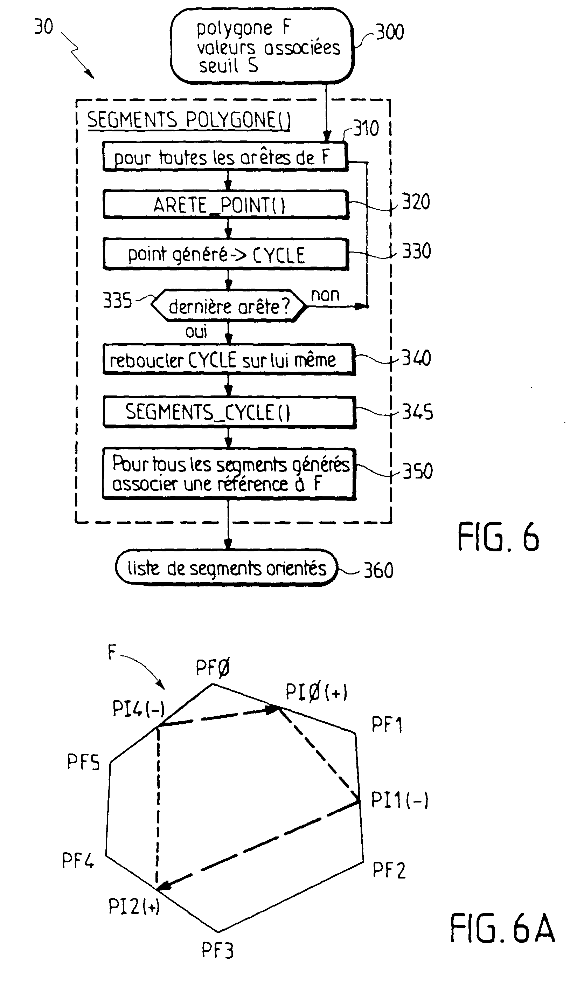

Il est maintenant fait référence aux figures 6 et 6A, pour la description d'un automate 30, dit "SEGMENTS_POLYGONE()".

L'entrée 300 de cet automate est un polygone F, tel qu'illustré sur la figure 6A. Le nombre des sommets de F est pair mais inconnu, au départ (ici 6 points PF0 à PF5). A ces points sont associées des "valeurs". L'entrée comprend aussi le seuil S.

Pour toutes les arêtes de ce polygone F (310), on appelle en 320 l'automate 40 ou ARETE_POINT() déjà décrit, avec comme paramètres les deux sommets de l'arête, leurs "valeurs", et le seuil S. Si les valeurs des deux sommets se placent de part et d'autre du seuil S, l'automate 40 va fournir un point intermédiaire, engendré comme défini à propos de la figure 4. Ce point est stocké dans une liste notée CYCLE (fermée plus tard).

Ceci se répète jusqu'à la dernière arête (335). De la sorte, on obtiendra par exemple les quatre points PI0 à PI4 illustrés sur la figure 6A, avec, nécessairement, des signes alternés.

L'étape 340 consiste à reboucler le CYCLE sur lui-même pour le fermer. On ajoute ainsi un lien entre PI4 et PI0. Le CYCLE est illustré en trait tireté sur la figure 6A.

Après cela, l'étape 345 consiste à appeler l'automate 70 ou SEGMENTS_CYCLE() décrit à propos de la figure 5. Ceci fournit deux segments, de PI1 à PI2, et de PI4 à PI0, respectivement, différenciés par un tireté long sur la figure 6A.

A l'étape 350, la liste de (ici deux) segments ainsi engendrés est complétée par le fait qu'on lui associe une référence à la face polygonale F traitée. Il en résulte en 360 une LISTE de segments orientés affectés à cette face polygonale, stockée en mémoire.

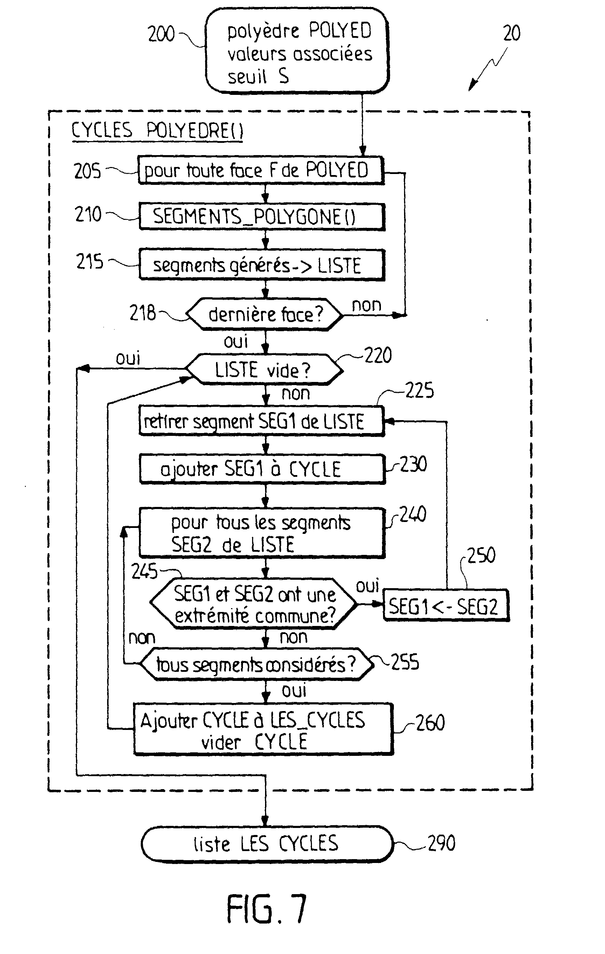

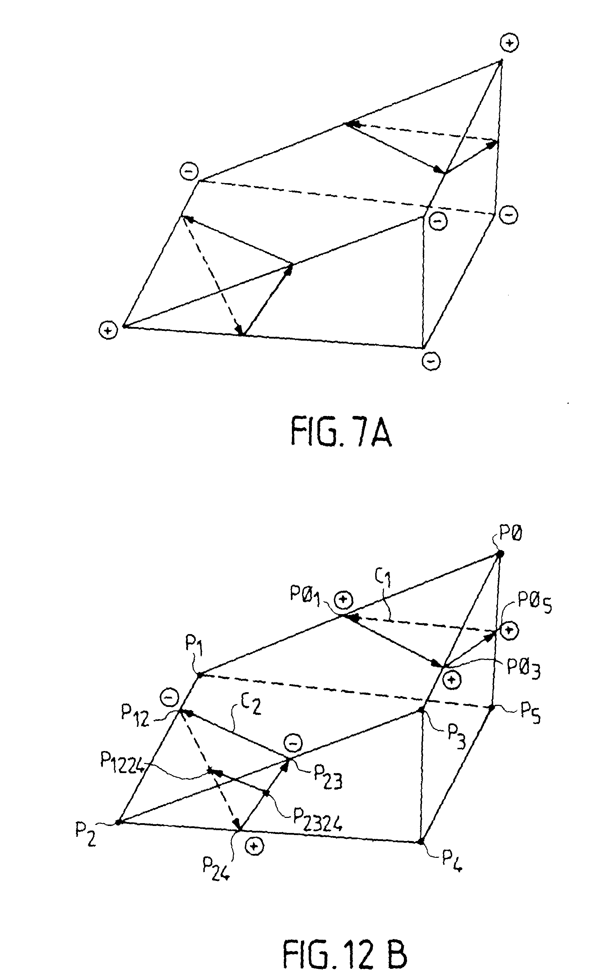

Il est maintenant fait référence aux figures 7 et 7A, pour la description de l'automate 20, dit CYCLES_POLYEDRE().

L'entrée de cet automate en 200 est la définition d'un polyèdre tel que celui illustré sur la figure 7A, avec le seuil S. A chacun des sommets est associée une valeur mesurée.

A l'étape 205, on démarre une boucle qui va traiter toutes les faces du polyèdre jusqu'à l'étape 218.

Le corps de la boucle consiste en un appel 210 de l'automate SEGMENTS_POLYGONE(), qui vient d'être décrit. Il en résulte pour la face considérée une LISTE de segments, comme rappelé par l'étape 215. Un exemple très simple est donné sur la figure 7A pour la face supérieure du polygone.

La seconde partie de l'automate consiste à analyser les liens entre tous les segments ainsi obtenus en LISTE, pour toutes les faces du polyèdre considéré. Le but est de définir un CYCLE, ou plusieurs, deux dans l'exemple de la figure 7A (l'ensemble sera noté LES_CYCLES). Dans chaque CYCLE sont rangés des segments qui se joignent deux à deux et forment ensemble une boucle continue. L'homme du métier comprendra qu'il existe toujours des segments qui se rejoignent, puisque leurs extrémités sont des points interpolés sur des arêtes, correspondant à la valeur de seuil et aux valeurs associés aux points d'extrémité de l'arête concernée, et ce par le même automate. Quelle que soit la face considérée du polyèdre, un tel point sera toujours le même pour l'arête considérée.

L'étape 220 détermine si la LISTE des segments est vide. Tant qu'elle ne l'est pas, on prend un premier segment SEG1 dans cette liste à l'étape 225. L'étape 230 consiste à introduire ce segment dans une liste provisoire dénommée CYCLE. Après cela, une boucle allant des étapes 240 à 255 considère tous les autres segments de la liste. Dès qu'on en trouve un, SEG2, qui a une extrémité commune avec le segment SEG1 en cours, à l'étape 245, alors l'étape 250 prend ce segment SEG2 comme nouveau segment en cours SEG1 et renvoie à l'étape 225 pour le retirer définitivement de la liste considérée, puis à l'étape 230 pour l'ajouter à la liste CYCLE, et ainsi de suite jusqu'à avoir traité tous les segments.

Ainsi est obtenu un CYCLE. L'étape 260 consiste à ajouter ce CYCLE à une liste globale notée LES_CYCLES, après quoi la liste provisoire CYCLE est effacée.

L'homme du métier comprendra en effet que :

- d'une part, si l'on a un segment, il existe toujours une suite ou CYCLE de segments, qui va se refermer sur elle-même, à laquelle ce segment appartient;

- mais l'ensemble des segments que l'on va pouvoir constituer sur un polyèdre donné peut comporter plusieurs cycles de ce genre (fig. 7A).

D'où la définition de la liste globale des cycles engendrés notée LES_CYCLES et obtenue à l'étape 290.

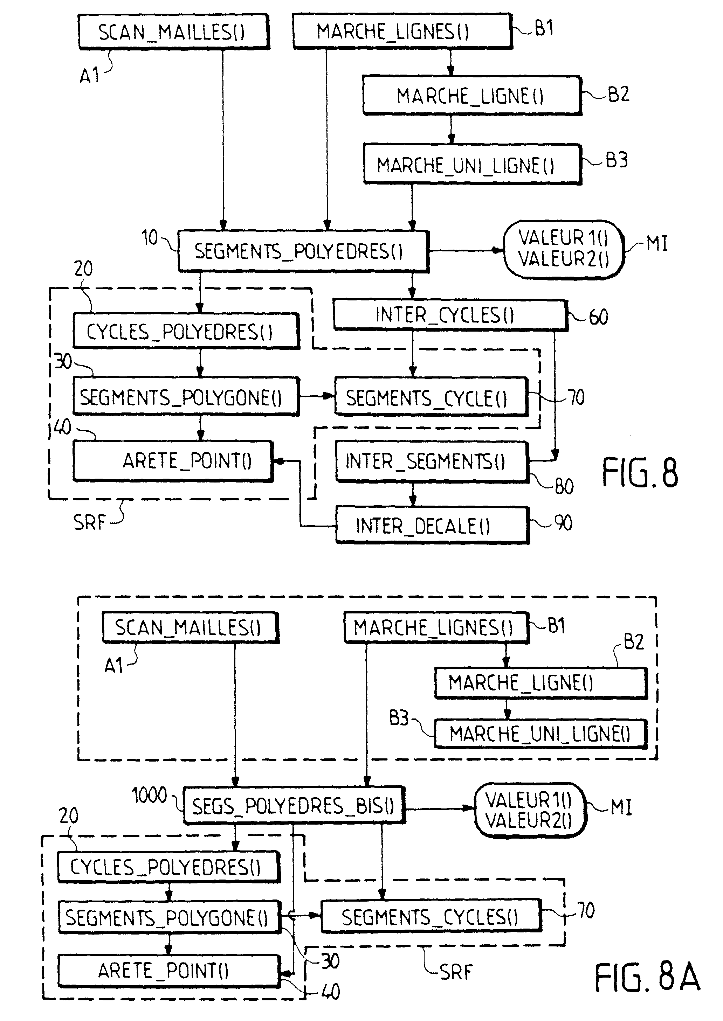

Il est maintenant fait référence à la figure 8. Ce qui est décrit plus haut correspond au rôle des automates 20, 30, 40 et 70 de la figure 8, isolés dans le cadre SRF. La figure 8 n'est pas le schéma séquentiel d'un mécanisme, comme c'était le cas pour les figures 4 à 7. Cette figure 8 est un schéma d'interaction des automates, les flèches étant dans le sens appelant vers appelé.

L'homme de métier comprendra que la liste des segments contenue dans LES_CYCLES, telle que finalement fournie à l'étape 290 de la figure 7, appartient à l'iso-surface associée au seuil S, pour la portion de l'espace considéré, et avec l'échantillonnage qui correspond au maillage polyédrique utilisé.

Ainsi les blocs du cadre SRF constituent à eux seuls un moyen intéressant pour déterminer une iso-surface.

Un avantage essentiel de ce moyen est qu'il évite (étapes optionnelles 432, 434, 442, 444 en particulier) l'existence de trous dans l'iso-surface ainsi déterminée. Un autre avantage est le fait que les moyens décrits conviennent pour tout maillage polyédrique de l'espace.

La figure 8 ajoute d'autres fonctions intéressantes, touchant d'une part à différentes manières d'utiliser ledit moyen (10,60,70,80,90) et d'autre part à différentes manières d'explorer la portion d'espace concernée (A1; B1 à B3).

Pour obtenir des lignes remarquables, il convient de construire l'intersection de deux iso-surfaces dans l'espace.

Sur la figure 8, le bloc MI correspond à au moins une mémoire d'images. Plus précisément :

- ou bien le bloc MI contient une seule mémoire d'image, à laquelle on adjoint (de préférence) des automates convertisseurs dénommés VALEUR1() et VALEUR2(), capables d'associer deux valeurs différentes à chaque point de l'image considérée. L'une de ces valeurs est par exemple la valeur mesurée pour le point de l'image, et l'autre représente une caractéristique différentielle de la valeur mesurée en chaque point, déterminée comme on le verra plus loin;

- le bloc MI peut également contenir deux mémoires d'images (individualisées alors en MI1 et MI2), auquel cas les deux automates convertisseurs VALEUR1() et VALEUR2() peuvent réaliser simplement une conversion de la valeur mesurée pour chacun des points des deux images dans la représentation numérique appropriée.

Ce bloc MI fournit donc à un automate principal 10, également dénommé SEGMENTS_POLYEDRE(), deux valeurs différentes pour chaque point de l'espace, les deux valeurs étant exprimées dans le même échantillonnage (maillage polyédrique).

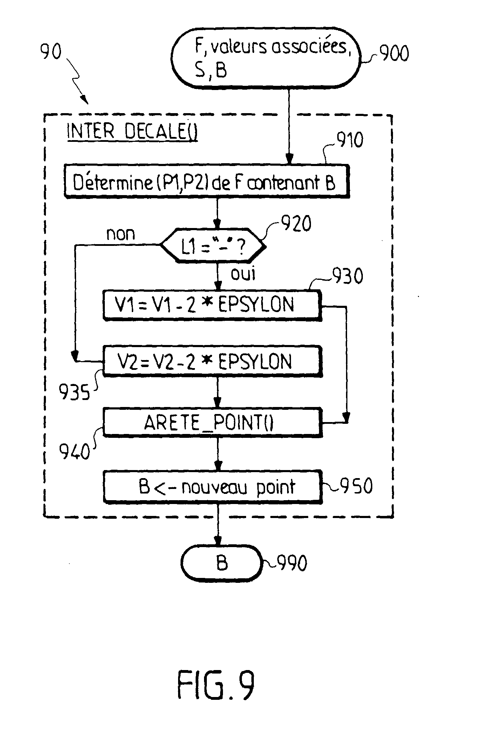

La figure 9 illustre un autre automate de base, référencé 90 sur la figure 8, et dénommé INTER_DECALE().

L'entrée 900 de cet automate est la description d'une face polygonale F d'un polyèdre du maillage, les valeurs associées à chaque sommet de cette face, la valeur de seuil S, et la désignation d'un point B appartenant à l'une des arêtes de ladite face F.

L'étape 910 détermine, par ses sommets P1 et P2, l'arête de la face polygonale F qui contient ce point B. Si le signe L1 associé au point P1 est -, comme déterminé par le test 920, l'étape 930 va diminuer la valeur V1 associée à ce point P1, et ce de deux fois epsilon, epsilon étant le même que précédemment. Dans le cas contraire, l'étape 935 va faire la même diminution, mais à l'autre extrémité pour la valeur V2 du point P2.

Après cela, il est prévu un appel en 940 à la procédure ARETE_POINT(), pour déterminer un point interpolé à l'intérieur du segment (P1, P2). Et ce sont les coordonnées dans l'espace de ce nouveau point, et le signe associé, qui sont retenus pour le point B recherché par cet automate.

En correspondance avec la quantité epsilon décrite à propos de la figure 4, celle de la figure 9 a pour avantage essentiel d'assurer une bonne construction des iso-surfaces ainsi que de leurs intersections, en évitant des difficultés lorsque les points extrêmes d'un segment sont proches de la valeur de seuil.

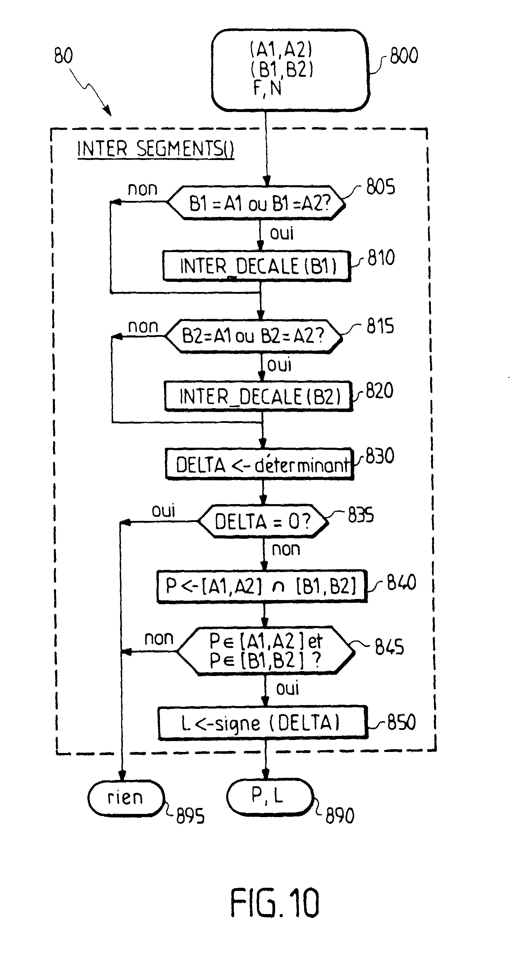

La figure 10 illustre un automate 80, dit INTER_SEGMENTS().

L'entrée 800 de cet automate est la désignation de deux segments. Les extrémités du premier sont A1 et A2, les extrémités du second sont B1 et B2. Ils appartiennent à une face polygonale F du maillage polyédrique. Et l'on désigne aussi le vecteur normal N à cette face polyédrique, orienté vers l'extérieur.

La première étape 805 de cet automate détermine si le point B1 est confondu (ou très proche) avec l'un des points A1 ou A2 de l'autre segment. Si oui, on appelle en 810 l'automate INTER_DECALE() pour ce point B1.

Les étapes 815 et 820 font de même, mais avec le point B2.

Après cela, on procède à la recherche de l'intersection entre les droites-supports (ou axes) des deux segments (A1, A2) et (B1, B2).

Une façon de faire est de calculer en 830 le déterminant DELTA associé au vecteur (A1,A2) au vecteur (B1,B2), et au vecteur normal N déjà cité.

Le test 835 examine si ce déterminant est nul, auquel cas il n'y a aucune intersection et l'on sort, sans résultat, à l'étape 895. Si ce déterminant n'est pas nul, c'est que les droites-supports des deux segments se coupent. L'étape 840 détermine alors quel est le point d'intersection P des droites supports des deux segments (A1, A2) et (B1, B2).

Après cela, l'étape 845 détermine si ce point d'intersection est bien situé à l'intérieur des deux segments (A1, A2) et (B1, B2) eux-mêmes. Si cette double condition n'est pas vérifiée, on sort à nouveau à l'étape 895. Si elle est vérifiée, on prend pour ce point P un signe qui est celui du déterminant DELTA, à l'étape 850. Et la sortie de l'automate est la définition du point P et de son signe L, à l'étape 890.

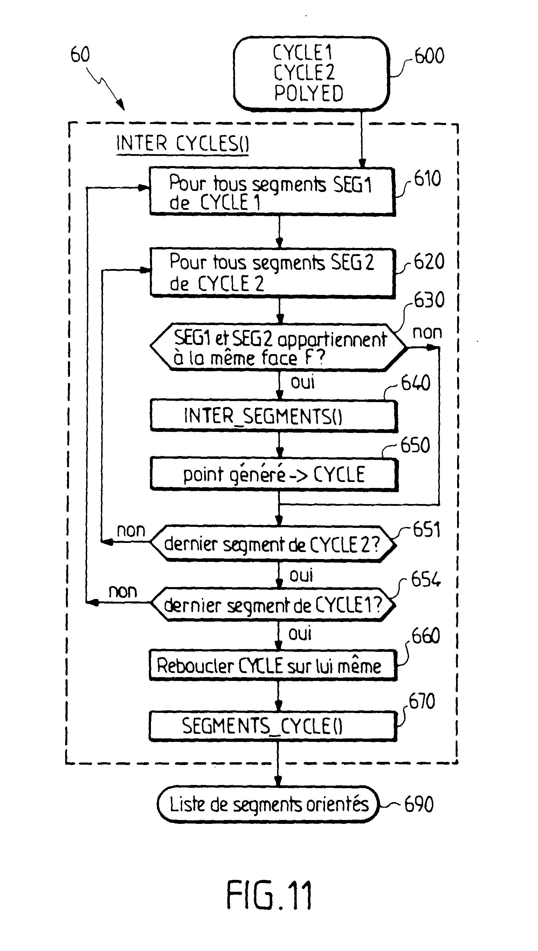

Il est maintenant fait référence à la figure 11, pour la description de l'automate 60 de la figure 8, dénommé INTER_CYCLES().

L'entrée de cet automate et la définition de deux cycles notés CYCLE1 et CYCLE2 ainsi que du polyèdre POLYED, auquel appartiennent ces deux cycles.

Les deux cycles, CYCLE1 et CYCLE2, sont de la nature obtenue en sortie de l'automate 20 décrit à propos de la figure 7.

Les deux premières étapes 610 et 620 de l'automate de la figure 11 correspondent au balayage de tous les segments SEG1 de CYCLE1 et SEG2 de CYCLE2 respectivement, et ce jusqu'aux fins de boucle 652 et 654.

Le corps de ces deux boucles imbriquées comprend :

- en 630 la détermination du fait que les deux segments SEG1 et SEG2 appartiennent ou non à la même face F du polyèdre POLYED. Si oui, on appelle en 640 l'automate INTER_SEGMENTS().

- en 650, le point fourni par cet automate est mis dans une liste que l'on appellera à nouveau CYCLE. (L'attention est attirée sur le fait que cette notation est utilisée pour une bonne compréhension des interactions des différents automates. Mais il doit être clair que cette liste CYCLE n'est pas la même que la liste temporaire CYCLE de la figure 7.)

Après le parcours des deux boucles imbriquées, l'étape 660 effectue un rebouclage de cette liste CYCLE sur lui-même. Et on appelle alors en 670 l'automate SEGMENTS_CYCLE(), qui fournit en 690 une liste de segments orientés associés aux deux cycles considérés.

L'homme du métier comprendra que, cette fois, la liste des segments orientés appartient à l'une et à l'autre des iso-surfaces, de seuils respectifs S1 et S2 des deux images MI1 et MI2. Ce seront donc des points d'une ligne remarquable, en l'espèce une bi-iso-ligne.

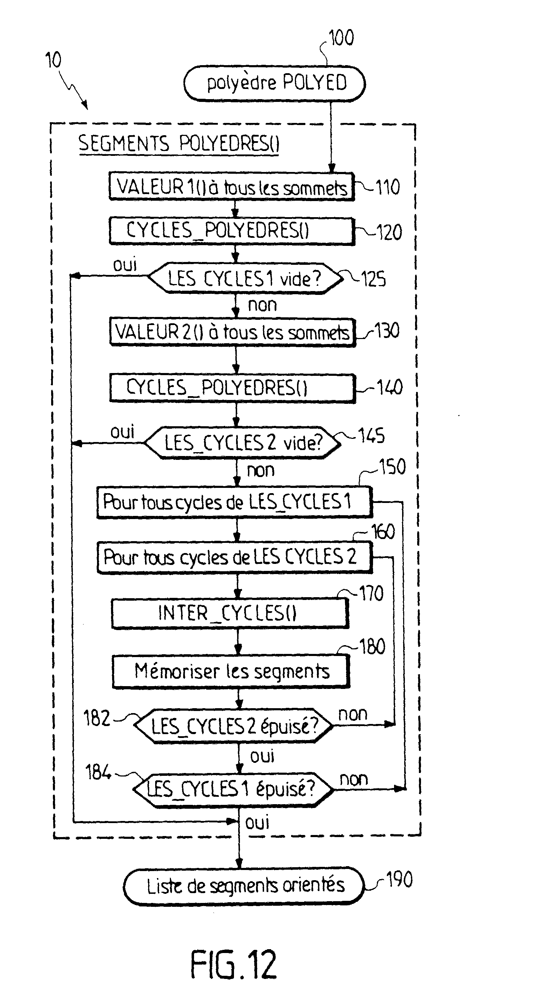

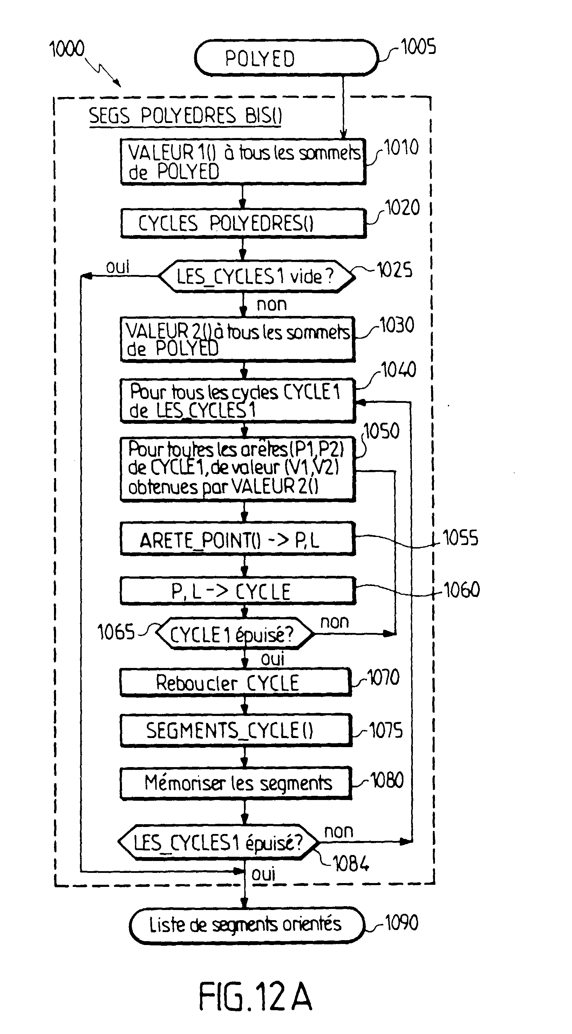

Il reste alors à décrire en référence à la figure 12 l'automate principal 10 de la figure 8, qui gère l'interaction de tous les automates décrits jusqu'à présent.

L'entrée de l'automate de la figure 12 à l'étape 100 est un polyèdre convexe appartenant au maillage polyédrique de l'espace, tel que considéré.

La première étape 110 consiste à appeler la mémoire MI pour affecter par l'automate de conversion VALEUR1() une valeur mesurée ou calculée à tout sommet de ce polyèdre ("première image"). Après cela, l'étape 120 appelle l'automate 20 de la figure 8, avec les sous-automates qui en dépendent, pour déterminer une liste LES_CYCLES1, qui correspond à l'iso-surface pour le seuil S, relativement à la première image.

Bien entendu, si LES_CYCLES1 est vide, c'est-à-dire que cette iso-surface n'existe pas, il est inutile d'aller plus loin, et le test 125 conduit directement à la sortie 190 avec une liste vide de segments orientés d'intersection.

Dans le cas contraire, les étapes 130 et 140 font la même chose que les étapes 110 et 120, mais cette fois avec la "seconde image" (mesurée ou calculée) et son automate de conversion VALEUR2().

De même, si le test 145 révèle que la liste de cycles dite LES_CYCLES2 ainsi obtenue est vide, on saute à la sortie 190 avec une liste vide de segments orientés.

La suite consiste à introduire une double boucle parcourant de 150 à 184 la liste de LES_CYCLES1, et de 160 à 182 la liste LES_CYCLES2. Le corps de ces deux boucles imbriquées consiste en un appel de l'automate INTER_CYCLES() à l'étape 170, avec mémorisation en 180 des segments orientés fournis par cet automate INTER_CYCLES().

Ces deux boucles imbriquées ayant été parcourues, on obtient en 190 une liste de segments orientés qui appartient à une ou plusieurs lignes remarquables communes aux deux images mesurées ou calculées, dans la portion de l'espace considérée, échantillonnée avec le maillage polyédrique choisi. (On parle ici de "deux images"; on verra plus loin qu'il peut s'agir de deux valeurs ou quantités différentes relatives à une même image).

La figure 8A présente une version simplifiée de la figure 8. Elle se caractérise par le fait qu'elle fait l'économie des automates INTER_CYCLES() (bloc 60, figure 8), INTER_SEGMENTS() (bloc 80, figure 8) et INTER_DECALE() (bloc 90). Cette version simplifiée comporte le même bloc de calcul d'iso-surface SRF que la version de la figure 8, ainsi que les mêmes modes d'exploration de l'espace (A1; B1 à B3). Elle diffère cependant en ce qu'elle comporte un seul bloc 1000 ou SEGS_POLYEDRES_BIS() à la place des blocs (10, 60, 80, 90) de la figure 8.

L'homme de l'art comprendra que cette modification entraîne une grande simplification de la technique mise en oeuvre, avec en contrepartie une moins bonne approximation des lignes remarquables reconstruites.

La figure 12A illustre plus en détail l'automate 1000 ou SEGS_POLYEDRES_BIS() de la figure 8A. Tout comme SEGMENTS_POLYEDRES(), cet automate prend en entrée une maille polyédrique POLYED (bloc 1005) et retourne (1090) la liste des segments orientés correspondant aux bi-iso-lignes passant par ce polyèdre.

Les blocs 1005 à 1030 de la figure 12A sont exactement les mêmes que les blocs 100 à 130 de la figure 8. La différence est que maintenant l'automate CYCLES_POLYEDRES() n'est pas relancé pour les valeurs calculées par VALEUR2(). A ce stade, l'automate SEGS_POLYEDRE_BIS() passe successivement en revue tous les cycles CYCLE1 de la liste LES_CYCLES1 entre les blocs 1040 à 1084; pour chaque cycle CYCLE1, l'automate considère successivement (blocs 1050 à 1065) toutes les arêtes (P1,P2) de ce cycle, ainsi que les deux valeurs correspondantes (V1,V2), toutes deux calculées à l'aide de VALEUR2() - (il est important de remarquer qu'à partir de l'étape 1020, on ne se sert plus des valeurs calculées par VALEUR1()).

P1 et P2 appartiennent par construction aux arêtes de POLYED. On calcule donc facilement par interpolation, par exemple par interpolation linéaire, la valeur V1 pour P1 et la valeur V2 pour P2, à partir des valeurs aux sommets de POLYED obtenues à l'aide de l'automate VALEUR2().

L'automate appelle alors (bloc 1055) l'automate ARETE_POINT() ou 40 (figure 4), qui permet de calculer, le cas échéant, un nouveau point P interpolé entre P1 et P2, ayant un label L. Ce nouveau point, s'il existe, est placé dans une liste intermédiaire de points appelée CYCLE, au bloc 1060.

Après consultation de toutes les arêtes de CYCLE1, il a donc été constitué une nouvelle liste intermédiaire de points CYCLE, qui est refermée sur elle-même au niveau du bloc 1070. On appelle ensuite l'automate SEGMENTS_CYCLE() (bloc 1075). Il transforme CYCLE en une liste de segments orientés. Ces segments sont soit envoyés directement pour affichage soit mémorisés dans une liste de segments au bloc 1080. La liste intermédiaire CYCLE est alors effacée, et l'on reboucle (1084) jusqu'à épuisement des cycles de la liste LES_CYCLES1().

La sortie de cet automate est la liste des segments orientés ainsi constitués, si ceux-ci n'ont pas été envoyés directement à l'affichage.

Cet exemple est basé sur celui de la figure 7A, sur lequel on a déjà calculé les cycles correspondant aux valeurs de VALEUR1(). On calcule ensuite les valeurs aux sommets P0 à P5 à l'aide de VALEUR2(). Puis les valeurs interpolées aux points (P12, P24, P23) et aux points (P01, P03, P05). En comparant les valeurs obtenues par rapport au seuil S2, on obtient les labels indiqués sur la figure 12B, et l'on obtient ainsi 0 segments générés pour le cycle C1 et le segment orienté P2324, P1224 pour le cycle C2.

On considérera maintenant l'application des automates décrits ci-dessus, en différentes variantes.

Comme déjà indiqué, il existe plusieurs manières de se servir des résultats ainsi obtenus, en particulier soit les visualiser, soit les utiliser pour comparer deux images.

Dans le cas d'une visualisation, l'ordre dans lequel les informations sont disponibles importe peu. Il n'en est naturellement pas de même dans le cas d'une comparaison d'images.

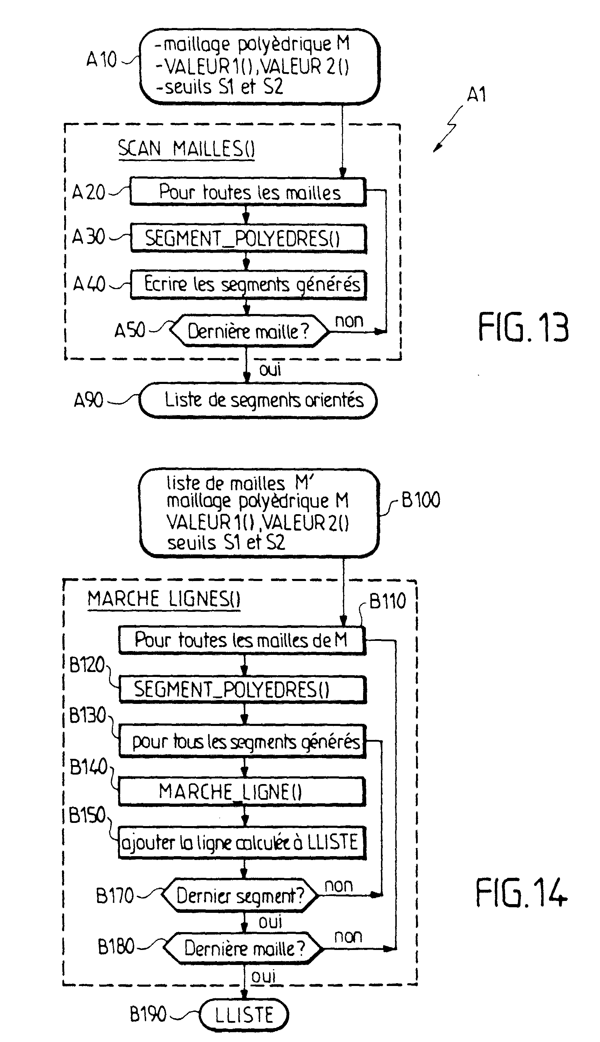

Lorsque l'ordre dans lequel on présente les informations graphiques pour affichage sur l'écran de visualisation n'a pas d'importance majeure, il est possible de faire usage de l'automate A1 de la figure 8, lequel est illustré plus en détail sur la figure 13, sous la dénomination SCAN_MAILLES().

L'entrée A10 de cet automate est la définition d'un maillage polyédrique d'une portion de l'espace. On dispose par ailleurs des automates de conversion VALEUR1(), VALEUR2() pour convertir sous la forme numérique appropriée les informations de valeurs associées à chaque noeud du maillage polyédrique. Il s'y ajoute deux valeurs de seuil S1 et S2. Une boucle allant de A20 à A50 va pouvoir décrire toutes les mailles de la portion d'espace concernée. Pour chaque maille, l'étape A30 appelle l'automate principal 10 ou SEGMENTS_POLYEDRE().

Celui-ci fournit une liste de segments orientés, qui est stockée en mémoire à l'étape A40, ou bien (par exemple) directement transmise à un moniteur pour visualisation.

La sortie A90 correspond à cette liste de segments orientés, qui peut être maintenant visualisée si elle ne l'a pas été en direct.

Dans d'autres cas, un suivi individuel de bout en bout de lignes remarquables peut être requis. Il est alors fait usage des automates B1 à B3 de la figure 8 qui seront maintenant décrits en référence aux figures 14 à 16, respectivement.

L'entrée B100 de l'automate B1 (figure 14) contient la définition d'une liste rangée de mailles M', correspondant aux mailles de départ des lignes recherchées, définies par rapport à un maillage polyédrique M, avec, à chaque noeud de la liste de mailles du maillage, une définition de deux valeurs par les automates de conversion précités VALEUR1() et VALEUR2(). S'y ajoute la définition de deux seuils S1 et S2.

Une boucle principale est établie entre les étapes B110 et B180. La première étape de cette boucle consiste (B120) en l'appel de l'automate principal SEGMENTS_POLYEDRE() ou automate 10 de la figure 8. Celui-ci fournit, pour la maille en cours, une liste de segments orientés.

Une boucle interne s'étend alors entre les étapes B130 et B170. Pour chaque segment contenu dans la liste, il est procédé en B140 à un appel d'une procédure MARCHE_LIGNE() que l'on décrira plus loin. Cette procédure ajoute la ligne qu'elle calcule à une liste de lignes notée LLISTE, et ce à l'étape B150.

Le résultat final en B190 est une liste de lignes remarquables LLISTE.

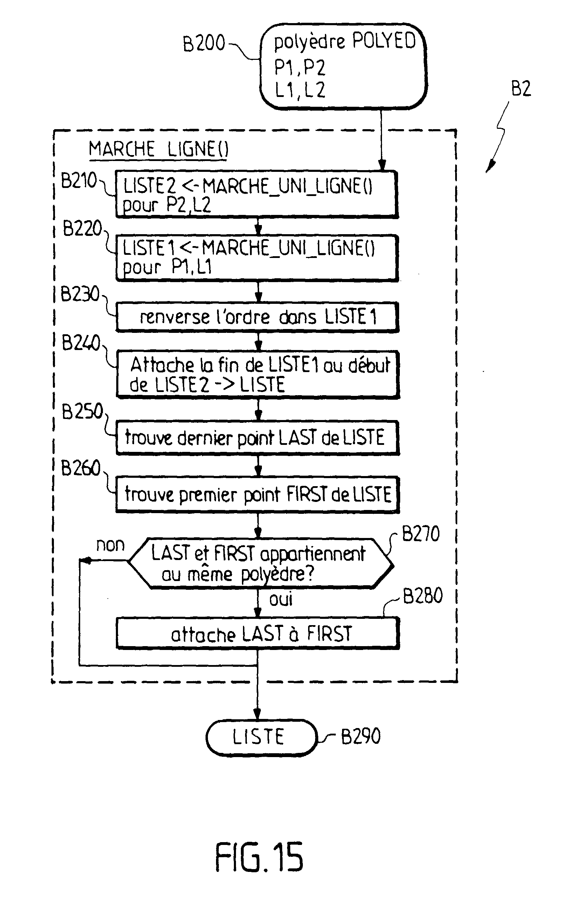

Sur la figure 15, l'entrée B200 de l'automate MARCHE_LIGNE() reçoit un polyèdre POLYED, deux points P1 et P2 appartenant à une arête de ce polyèdre, et leurs signes respectifs L1 et L2.

L'étape B210 appelle un autre automate MARCHE_UNI_LIGNE() pour le point P2 avec son sens ou signe L2, et ce pour établir une première liste de points constituant une ligne remarquable partant àe P2, notée LISTE2.

L'étape B220 fait de même, mais avec le point P1 et son sens L1, pour remplir une autre liste de points, notée LISTE1, partant de P1.

L'étape B230 consiste dans un tri en ordre inverse de LISTE1.

L'étape B240 réalise une concaténation ajoutant LISTE2 à la fin de LISTE1 (inversée). Le résultat concaténé est seul traité ci après, sous le nom de LISTE, qui représente la ligne remarquable passant par les points P1 et P2.

Ensuite, l'étape B250 recherche la dernière cellule de LISTE (en fait, la dernière de LISTE2), que l'on dénomme LAST. L'étape B260 recherche la première cellule de LISTE (en fait de LISTE1 inversée), que l'on nomme FIRST. L'étape B270 détermine si les deux points LAST et FIRST appartiennent au même polyèdre.

Si oui, on attache le point LAST au point FIRST, et LISTE est fermée. Sinon, LISTE est ouverte. LISTE est le résultat à l'étape B290; il représente une ligne qui est soit fermée sur elle-même, soit ouverte.

L'homme du métier sait par ailleurs qu'on sait construire en traitement d'image ce qui s'appelle une "table de hachage" ("hashing table"). C'est un outil de traitement numérique qui permet de stocker et de retrouver très facilement en mémoire des données associées à des points d'un espace de dimension quelconque.

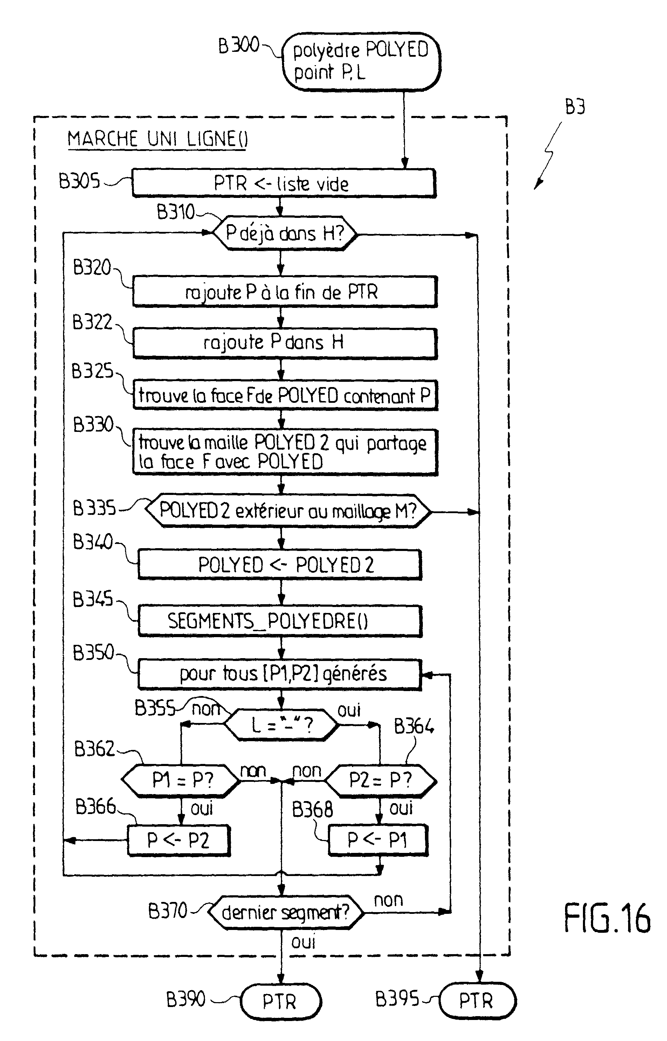

L'automate MARCHE_UNI_LIGNE() sera maintenant décrit en référence à la figure 16. Il porte la référence B3 sur la figure 8, et les références numériques de la figure 16 commencent par conséquent toutes par B3.

L'étape d'entrée B300 consiste à recevoir la définition d'un polyèdre POLYED, ainsi que d'un point P avec son signe ou sens L.

L'étape B305 consiste à préparer sous la dénomination PTR une liste, initialement vide.

On dispose d'une table de hachage H, supposée vide.

Le test 310 va rechercher si le point P donné en entrée se trouve déjà dans cette table de hachage. (Cette condition n'est naturellement pas vérifiée au départ.)

Si elle n'est pas vérifiée, on rajoute le point P à la fin de la liste PTR à l'étape B320. A l'étape B322, on le rajoute dans la table de hachage.

A l'étape 325, on recherche quelle est la face F du polyèdre POLYED qui contient le point P.

En vertu de la description connue du maillage polyédrique de l'espace, l'étape B330 détermine une autre maille POLYED2, qui satisfait la condition de partager cette même face F avec le polyèdre POLYED que l'on considère.

Le test B335 détermine si ce polyèdre POLYED2 est extérieur au maillage M (extérieur à la portion de l'espace traitée).

S'il est contenu dans le maillage, on prend ce polyèdre POLYED2 à la place du polyèdre POLYED concerné, à l'étape B340, et l'étape B345 consiste en l'exécution de l'automate principal SEGMENTS_POLYEDRE() sur ce nouveau polyèdre.

Ensuite, pour tous les points P1 et P2 dans la liste engendrée par cet appel de l'automate SEGMENTS_POLYEDRE,

- on recherche en B355 si le signe du point est "-". Suivant qu'il est "+" ou "-", l'étape B362 ou B364 va rechercher si P coïncide avec P1 ou P2 respectivement, auxquels cas on prend comme point P, P2 et P1 respectivement, aux étapes B366 et B368.

Ceci se poursuit jusqu'à l'analyse du dernier segment de la liste établie par l'étape B345, pour donner en B390 une liste PTR finale.

Entre-temps, un bouclage a été effectué entre les sorties des étapes B366 et B368 et l'étape B310. Les sorties non traitées des étapes B310 et B335 se traduisent par une sortie directe en B395, avec la liste PTR telle qu'elle existe jusqu'à présent.

L'homme du métier comprendra que les automates B1 à B3 ainsi décrits en détail permettent, contrairement à l'automate A1, d'effectuer une exploration le long des lignes remarquables de la portion d'espace que l'on considère.

Bien évidemment, il existe différentes manières de définir l'ensemble des mailles de départ M', à l'entrée B100 de l'automate de la figure 14. Il est tout d'abord possible de passer toutes les mailles de M en revue séquentiellement. On peut également tirer au sort de façon aléatoire les coordonnées d'un nombre donné de mailles de départ M'. Il est encore possible de laisser à un utilisateur le soin de désigner M' par tout moyen approprié.

Ce qui précède définit, pour un maillage polyédrique quelconque de l'espace:

- un moyen avantageux (20, 30, 40, 70) de déterminer une iso-surface pour une image;
- un moyen nouveau pour déterminer des lignes remarquables, comme des bi-iso-lignes (10, 20, 30, 40, 60, 70, 80, 90);
- deux modes d'exploration (A1; B1 à B3) d'une ou deux images, utilisables au choix selon l'application.

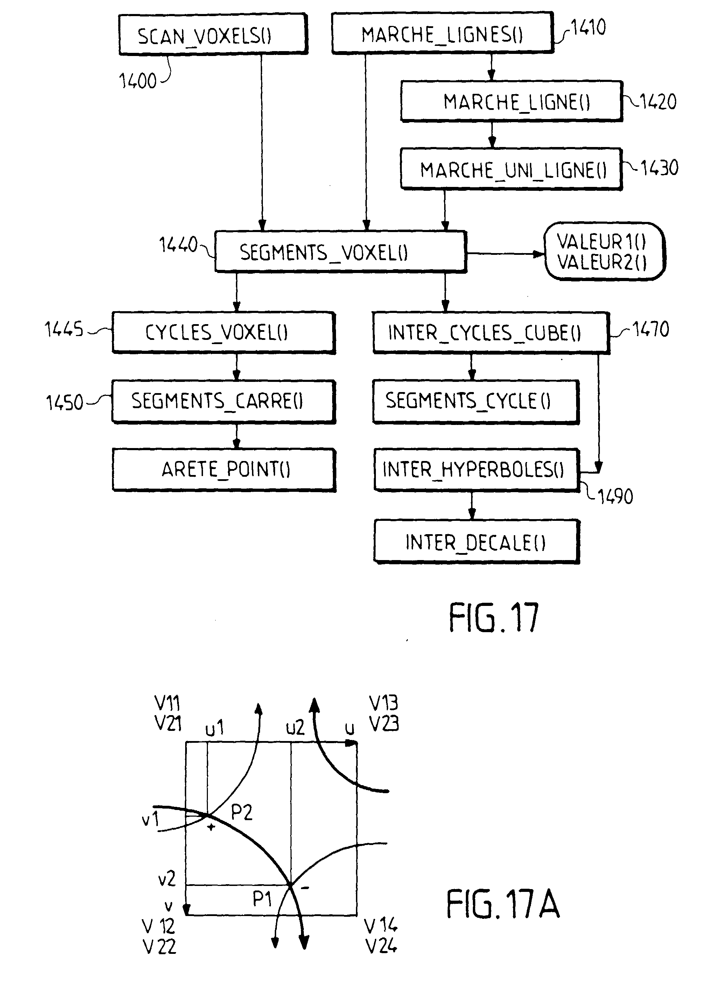

Dans une première variante de réalisation (figure 17), le maillage de l'espace est constitué de cubes identiques, également appelés "voxels".

Il en résulte alors des simplifications du cas général qui vient d'être décrit.

Tout d'abord, le nombre de cycles et de segments que l'on va engendrer pour chaque voxel ont des valeurs maximum connues. Il en résulte la possibilité de gérer la mémoire nécessaire pour la mise en oeuvre de l'invention sans mécanisme d'allocation dynamique de mémoire.

L'automate SCAN_VOXEL() 1400 (A1, figure 8) ne nécessite aucune gestion dynamique de la mémoire. Au contraire, il travaille à l'aide d'un tableau mémorisé de taille fixe, puisqu'il consiste simplement à passer séquentiellement en revue tous les voxels contenus dans la portion d'espace considérée, maillée par une grille tridimensionnelle régulière, par exemple une maille cubique. (Le mot cubique s'étend dans la suite à toute maille en forme de parallélépipède; l'homme de métier sait qu'il existe toujours un isomorphisme capable de faire passer d'un parallélépipède à un cube).

Par ailleurs, dans l'automate 1430 (ou B3, figure 8), la recherche du voxel voisin au voxel considéré est immédiate.

De son côté, l'automate principal SEGMENT_VOXEL() noté ici 1440 (correspondant à 10, figure 8), va maintenant engendrer au maximum six segments orientés, d'où là encore des simplifications en ce qui concerne la gestion de la mémoire. En bref, il exécute deux fois l'automate CYCLES_VOXEL() ou 1445 pour les deux jeux de valeurs et de seuils définis, afin d'engendrer les deux listes de cycles orientés LES_CYCLES1 et LES_CYCLES2. Chaque liste de cycles ainsi obtenue est constituée d'au maximum quatre cycles, ayant chacun au maximum douze sommets. De plus, le nombre total des sommets dans une liste de cycles ne dépasse pas douze.

Chacun de ces cycles représente un morceau de l'iso-surface définie par interpolation trilinéaire à partir des valeurs des huit sommets du cube. Plus précisément, les points de chacun de ces cycles correspondent à l'intersection de cette iso-surface avec les arêtes du cube élémentaire concerné.

L'automate CYCLES_VOXEL() ou 1445 de la figure 17 prend pour entrée les coordonnées du voxel, ainsi que les huit valeurs associées à ses huit sommets, et le seuil ou iso-valeur S considérée. Cet automate va considérer successivement chacune des six faces du cube ou voxel, en constituant à chaque fois un tableau de quatre valeurs, correspondant aux quatre sommets du carré (parallélogramme) que constitue la face du cube (parallélépipède) considéré. L'ordre des valeurs a de l'importance, et doit être tel que le sens de parcours du carré défini par la règle dite du tire-bouchon donne une orientation qui pointe vers l'extérieur du cube. L'automate SEGMENT_CARRE() ou 1450 est appelé une fois pour chaque face du cube. Il renvoie au maximum deux segments, formés chacun d'un couple ordonné de points de l'espace tridimensionnel.

Les extrémités de ces deux segments correspondent à l'intersection de l'iso-surface avec les quatre arêtes du cube appartenant à cette face.

Le Demandeur a observé qu'en réalité l'intersection exacte de l'iso-surface basée sur l'interpolation trilinéaire avec la face du cube est une hyperbole pouvant constituer au plus deux branches séparées. En conséquence, il est estimé que les segments reconstruits par cet automate SEGMENT_CARRE() soient considérés comme des approximations de ces branches d'hyperboles, approximations qui se confondent exactement avec les segments, mais seulement au niveau des arêtes du cube.

Après les six appels de l'automate SEGMENTS_CARRE() ou 1450, on obtient au maximum douze segments orientés qui permettent, comme pour l'automate CYCLES_POLYEDRE(), de reconstituer des cycles s'enroulant autour du voxel, par comparaison des extrémités des segments. Il existe au maximum quatre cycles distincts. L'automate CYCLES_VOXEL() ou 1445 retourne tous les cycles ainsi constitués.

On peut encore préciser la nature de l'automate SEGMENT_CARRE() 1450. En effet, elle a pour entrée quatre valeurs V1 à V4, prises de façon ordonnée, et correspondant aux quatre sommets d'un carré.

Il est alors possible de considérer directement tous les cas possibles de distribution des labels ou signes au sommet du carré. Les quatre sommets reçoivent en effet chacun un label qui est "-" si la valeur associée au sommet est inférieure ou égale à l'iso-valeur ou seuil considéré S, et "+" dans le cas contraire. Il existe donc au maximum seize cas possibles en ce qui concerne l'attribution des labels aux quatre sommets d'un carré.

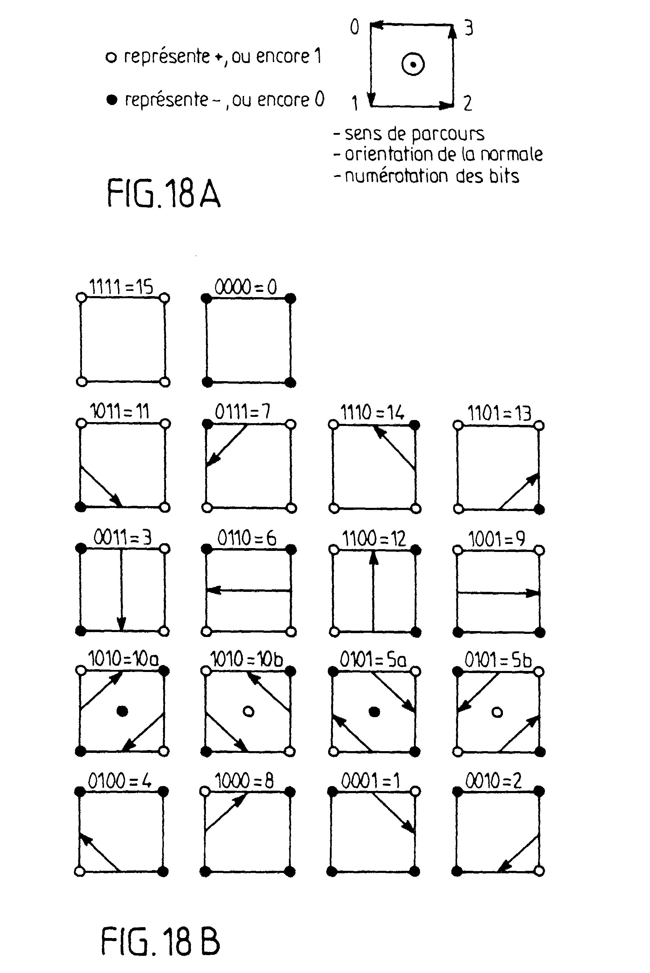

Il suffit alors de constituer un mot dit "code" de quatre bits, en utilisant les labels des sommets, dans l'ordre de parcours du carré, du poids le plus fort au poids le plus faible, comme illustré sur les différents dessins de la figure 18.

La figure 18A illustre le sens de parcours d'un carré en vertu de la règle du tire-bouchon déjà citée : lorsque le carré est parcouru dans le sens inverse des aiguilles d'une montre, la normale au carré est supposée orientée vers l'avant de la figure. L'ordre des bits dans le sens des poids va de 0 à 3.

Lorsqu'un sommet d'un carré est associé au label ou signe "+", on le représente par un cercle vide. On le représente par un cercle plein dans le cas contraire (label "-" ou 0).

Selon la figure 18B, les codes 0 ou 15 correspondent respectivement à quatre sommets de label "-" ou quatre sommets de label "+". Dans ce cas, l'automate SEGMENT_CARRE() s'arrête en ne retournant aucun segment.

Comme précédemment, l'automate ARETE_POINT() est exécutée pour chaque arête du carré qui présente des sommets ayant des labels opposés. Ceci permet d'engendrer au maximum quatre points intermédiaires, correspondant chacun à l'intersection de l'iso-surface définie par interpolation trilinéaire avec les arêtes correspondantes du voxel.

Il est alors inutile d'appeler l'automate SEGMENTS_CYCLE(), comme on le verra maintenant.

En effet, les indications de lien entre les sommets suffisent pour définir la plus grande partie des codes binaires, ou de leur contre-valeur hexadécimale, qui est ici utilisée dans la description.

Les cas particuliers concernent les codes 5 et 10, pour lesquels il existe une ambiguïté. Cette ambiguïté est résolue en considérant le signe du label L que l'on peut associer à la moyenne des valeurs respectivement existantes aux quatre sommets du carré. Ce label est par exemple "-" si cette moyenne $V = (V1+V2+V3+V4)/4$ est inférieure ou égale à l'iso-valeur S; il est "+" si V est supérieur à S.

Le cas du code 5 se décompose donc en deux cas 5a et 5b. De même, le cas du code 10 se décompose en deux cas 10a et 10b.

On obtient donc en tout 18 cas de liaisons possibles à l'intérieur d'une face carrée du voxel.

L'homme du métier aura remarqué que les différents liens ainsi engendrés sont les mêmes que ceux qui auraient été produits par l'automate SEGMENTS_CYCLE(), sauf pour les cas 5 et 10 qui viennent d'être examinés. Ces deux cas constituent une caractéristique remarquable de l'automate SEGMENTS_CARRE() par rapport à SEGMENTS_POLYGONE(). La modification qu'ils impliquent a notamment pour but de réaliser un maillage polygonal de l'iso-surface correspondante, et ce avec la même topologie que l'iso-surface définie par l'interpolation trilinéaire. En effet, si l'on change l'orientation de la face F, les liens constitués restent les mêmes en changeant simplement de sens.

Enfin, il est intéressant d'associer à chaque arête une référence à la face F, cette fois-ci sous la forme d'un code noté ORI, compris entre 1 et 6, qui désigne l'orientation de la face du cube qui contient les segments concernés.

L'automate SEGMENT_CARRE() fournit alors comme résultat l'ensemble de ces segments orientés, qui sont au maximum au nombre de deux.

Dans la partie droite de la figure 17, sous l'automate 1440, on pourrait là aussi utiliser les mêmes automates que sur la figure 8. Mais des simplifications sont intéressantes.

Au lieu de INTER_CYCLE(), une variante intéressante dénommée INTER_CYCLE_CUBE() consiste à prévoir la fourniture d'au plus six segments orientés, renvoyés comme résultat direct à l'automate SEGMENTS_VOXEL().

En outre, il est possible de remplacer l'automate INTER_SEGMENT() par INTER_HYPERBOLE() ou 1490.

Ce nouvel automate prend pour entrée deux segments orientés SEGMENT_A et SEGMENT_B, formés de deux couples ordonnés de points (A1, A2) et (B1, B2), ainsi que deux listes ordonnées des quatre valeurs (V11, V12, V13, V14) et (V21, V22, V23, V24), associées à la face F qui contient ces segments, et correspondant respectivement aux deux jeux de valeurs et aux deux seuils. INTER_HYPERBOLE() utilise encore l'indice "ORI" qui indique l'orientation de la face F considérée dans le cube ou voxel, parmi les six orientations possibles. Cet indice ORI permet de retrouver immédiatement quelle est la direction N de la normale associée à la face F.

Pour éviter les cas dégénérés d'intersection, un appel à l'automate INTER_DECALE() permet le cas échéant de déplacer légèrement les points B1 et/ou B2 en cas de coïncidence avec A1 ou A2.

Ensuite, on calcule exactement les intersections des deux hyperboles définies par interpolation bilinéaire à partir des valeurs (V11, V12, V13, V14) et (V21, V22, V23, V24). (Dans le cas de parallélépipèdes quelconques - non rectangles -, on applique l'interpolation hyperbolique en se ramenant localement à une forme carrée, par changement de repère - l'isomorphisme précité).

Une façon de calculer ces intersections consiste à résoudre le système d'équations donné en Annexe I, formule (XVIII). Il est également fait référence à la figure 17A.

Les coordonnées u, v sont les coordonnées des points d'intersection, dans le repère bidimensionnel associé à la face F. Elles sont obtenues en éliminant le produit uv du système d'équation (XVIII) par multiplication de la première équation par V23+V21-V24-V22, et de la seconde par V13+V11-V14-V12, et en construisant la différence des deux équations ainsi multipliées. Il en résulte la connaissance de v en fonction de u. On remplace v par cette valeur dans l'une des deux équations, ce qui donne une équation du second degré en u, pouvant conduire à deux solutions d'intersection, ce qui fournit au plus deux points d'intersection possibles P1 et P2.

Si ce calcul fournit zéro ou une solution réelle, alors l'automate INTER_HYPERBOLE() s'arrête en ne retournant aucun point nouveau. Si elle fournit deux solutions réelles, on affecte à chacun de ces points P1 et P2 un label ou signe qui correspond au signe du déterminant de la matrice formé :

- par le vecteur tangent, en le point P1 ou P2 considéré, sur l'hyperbole définie par V11, V12, V13, V14,
- par le vecteur tangent en ce même point P1 ou P2 à l'hyperbole définie par V21, V22, V23 et V24, et
- par la normale N à la face considérée.

L'automate INTER_HYPERBOLE renvoie alors les points d'intersection ainsi calculés, qui appartiennent bien aux parties des branches d'hyperboles définies d'un côté par (V11, V12, V13, V14) et de l'autre par (V21, V22, V23, V24), limitées respectivement par les segments A1, A2 et B1, B2, et ce dans leur ordre d'apparition le long de la branche d'hyperbole (A1, A2).

On observera que la face F est susceptible d'appartenir à deux voxels différents de la grille tridimensionnelle formant le maillage de base. Toutefois, comme pour le cas de l'automate INTER_SEGMENT(), le résultat est indépendant de l'orientation de la face F, à l'exception des labels associés aux nouveaux points créés, et de leur ordre d'apparition, qui s'inverse.

La position de ces nouveaux points est la même dans les deux orientations possibles de la face considérée. Ceci garantit la continuité des bi-iso-lignes reconstruites.

L'explication de cela réside dans le fait que les intersections sont calculées à partir de valeurs (V11, V12, V13, V14) et (V21, V22, V23, V24) associées aux sommets de la face, et qui ne dépendent pas de l'orientation de cette face.

Enfin, contrairement au cas rencontré en construisant l'intersection de segments, les points calculés par l'automate INTER_HYPERBOLE() appartiennent exactement aux bi-iso-lignes définies par interpolation trilinéaire sur les voxels.

Finalement, la procédure INTER_HYPERBOLE() retourne donc 0, 1 ou 2 points d'intersection, munis chacun d'un label "-" ou "+".

Une autre variante de l'invention utilise un maillage tétraédrique de l'espace.

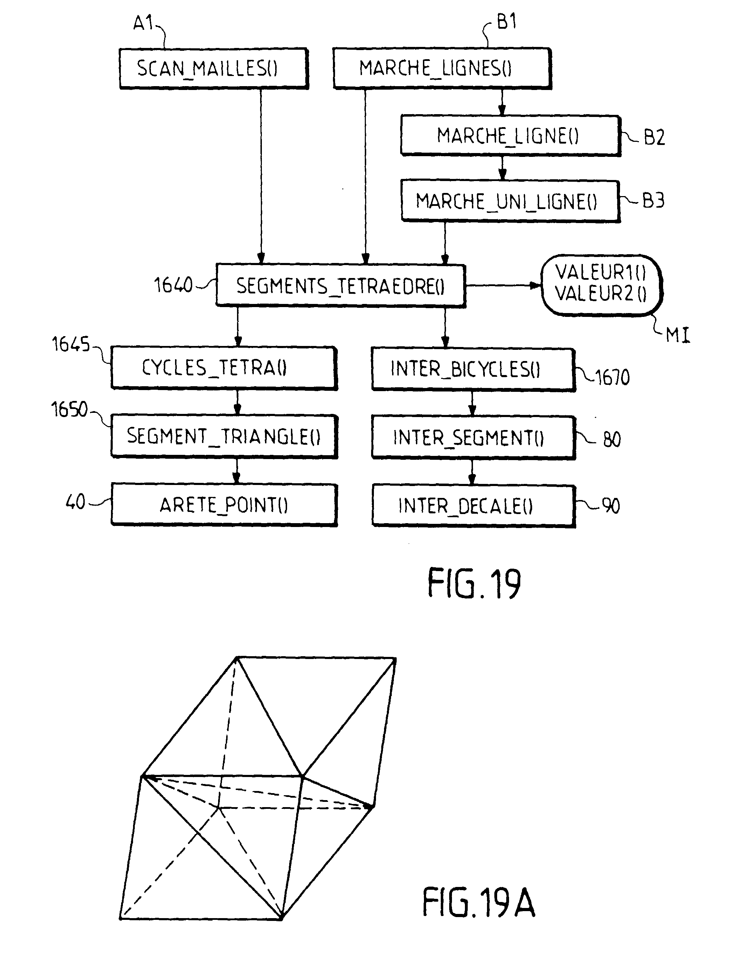

La figure 19A montre comment une maille de base à cinq tétraèdres peut représenter un parallélépipède, dont l'aptitude à remplir complètement l'espace sera immédiatement comprise.

Le mécanisme global pour extraire les lignes remarquables est alors illustré sur la figure 19. Les blocs A1, B1, B2, B3 et MI, ainsi que 40 et 90 de celles-ci peuvent être les mêmes que dans le cas général d'un maillage polyédrique.

L'automate SEGMENT_TETRAEDRE() 1640 est par contre modifié par rapport à SEGMENT_POLYEDRE().

En effet, avec un polyèdre de base tétraédrique, cet automate 1640 fournira au maximum deux segments orientés. A cet effet, l'automate 1640 fait appel deux fois à un automate 1645 ou CYCLE_TETRA(). Celui-ci est une version simplifiée de l'automate 20 de la figure 7 : en effet, il prend en entrée un tétraèdre TETRA, une liste de valeurs associées chacune à l'un des sommets du tétraèdre, et un seuil ou iso-valeur S.

Le sous-automate appelé, au lieu de SEGMENT_POLYGONE() de la figure 6, se simplifie en SEGMENT_TRIANGLE(). Cet automate a pour entrée une face triangulaire du tétraèdre (trois points et les trois valeurs associées) et d'un seuil ou iso-valeur S. Il renvoie zéro ou un segment orienté. on comprend dans ce cas qu'il n'est nullement nécessaire de faire appel à l'automate 70 pour parcourir ces segments.

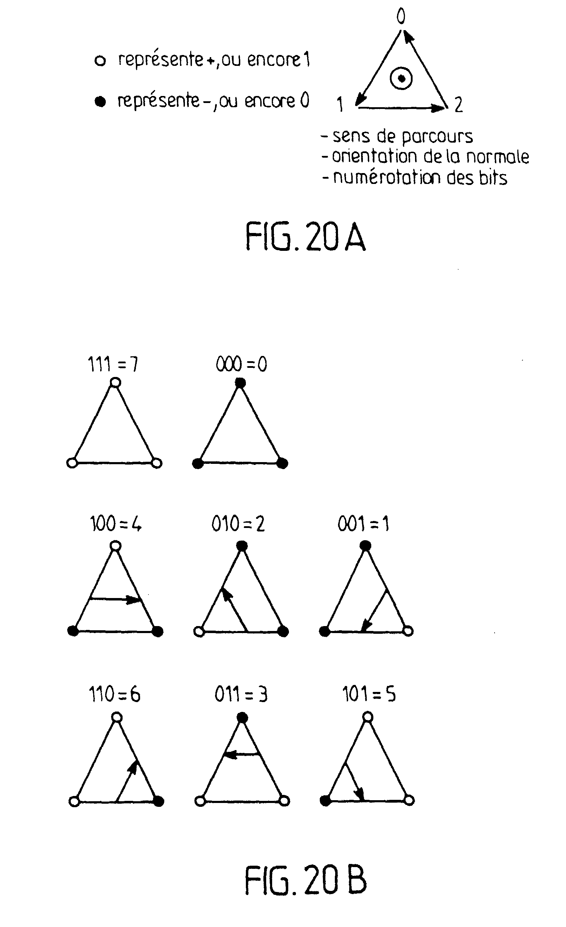

La première étape de cet automate SEGMENT_TRIANGLE() consiste à calculer un code de trois bits pour le triangle, de la même manière que cela était décrit pour le cas du carré précédemment, mais avec seulement trois sommets. Il ne reste plus que les huit cas possibles de la figure 20B. Le parcours du tétraèdre est illustré sur la figure 20A, avec les mêmes conventions de représentation que précédemment (dans la figure 18).

Sur la figure 20B, les cas 0 et 7 (en hexadécimal) sont ceux où aucun segment n'est généré. Dans les autres cas, l'automate ARETE_POINT() 40 est appelé seulement pour deux des trois arêtes. Cela suffit en effet pour déterminer le segment recherché.

Une variante consiste à examiner directement les 16 cas possibles pour la distribution des labels aux quatre sommets du tétraèdre, auquel cas il n'est plus du tout nécessaire d'appeler la procédure 40 ou ARETE_POINT().

Dans la partie droite de la figure 19, des simplifications interviennent également. En effet, l'automate INTER_CYCLES() référencé 60 sur la figure 8 peut être remplacé par une variante 1670 sur la figure 19, notée INTER_BICYCLES(). Cette variante tient compte du fait que le cycle engendré en CYCLE ne pourra posséder que 0, 2 ou 4 sommets (extrémités de segments). Elle fait l'économie de l'appel à l'automate SEGMENTS_CYCLE().

Dans le cas sans aucun sommet, il ne peut y avoir aucun segment. Si CYCLE a deux sommets, le segment correspondant, orienté du label "-" vers le label "+", est renvoyé comme résultat. Si CYCLE possède quatre sommets, alors les segments sont constitués suivant les règles de liens du carré, telles que définies sur la figure 18B, et en utilisant la moyenne des quatre valeurs associées pour lever l'ambiguïté des cas de code 5 et 10, comme déjà décrit.

On s'intéressera maintenant à une variante particulièrement intéressante de l'invention.

Dans ce qui précède, les automates de conversion VALEUR1() et VALEUR2() étaient supposés traiter des données relatives à deux images différentes.

Dans ce qui va être maintenant décrit, l'un des deux automates continue à fournir une grandeur mesurée relative à une image. L'autre automate fournit une grandeur différentielle relative à ladite grandeur mesurée.

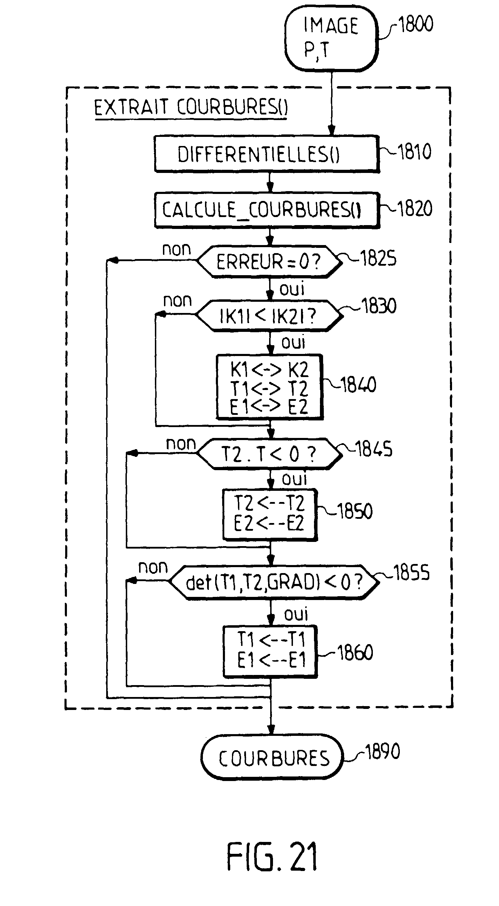

Un automate utilisable à cet effet est celui dénommé EXTRAIT_COURBURES(), qui sera maintenant décrit en référence à la figure 21.

L'étape d'entrée 1800 de cette figure 21 consiste en la réception d'une image, dont est désigné un point P, avec en outre une direction privilégiée de l'espace, représentée par exemple sous la forme d'un vecteur unitaire T dans l'espace tridimensionnel.

La première étape de l'automate de la figure 21 est une étape dite DIFFERENTIELLES(), notée 1810. Elle consiste essentiellement en le calcul des dérivées successives jusqu'à l'ordre 3, pour l'image considérée, au point P.

La notation et la définition de ces dérivées jusqu'à l'ordre 3 sont données dans l'annexe II à la présente description (la suite de l'annexe I sera discutée plus loin). On l'appellera "structure DIFFER" dans la suite.

Pour calculer ces dérivées, un premier moyen utile consiste en une fonction d'interpolation INTERPOLE(), capable de définir les valeurs d'un point de l'image n'ayant pas nécessairement des coordonnées entières correspondant au maillage dans lequel est définie cette image. Une telle fonction d'interpolation permet, à partir de l'image tridimensionnelle disponible, d'accéder à une fonction continue F de l'espace tridimensionnel, dont tous les points passent par les points de l'image telle qu'échantillonnée.

Comme fonction d'interpolation, on peut utiliser une technique de filtrage linéaire. Dans ce cas, la valeur V de la fonction F telle qu'interpolée en un point P correspond à la convolution de l'image tridimensionnelle IMAGE par une fonction tridimensionnelle de lissage G, définie à l'avance.

Dans ces conditions, pour obtenir les différentielles au degré voulu de la fonction F au point P, il suffit d'effectuer la convolution de l'image avec la différentielle correspondante de la fonction de lissage G choisie.

Une description de cette technique se trouve dans l'ouvrage "COMPUTER VISION", Dana H. BALLARD et Christopher M. BROWN, Prentice-Hall INC., Englewood Cliffs N.J. 07632, 1982.

En pratique, il est intéressant, pour les points P appartenant à l'image reçue IMAGE, de précalculer les 20 sous-images tridimensionnelles, de taille fixée par les utilisateurs, correspondant aux 20 différentielles possibles de la fonction G, de l'ordre 0 à l'ordre 3.

De telles sous-images sont généralement appelées masques de convolution.

Le calcul d'une différentielle donnée de la fonction F au point P, par exemple FXXY, avec les notations de l'annexe 2, s'effectue en calculant la somme des valeurs de l'image IMAGE autour du point P, pondérée par les valeurs de la sous-image correspondant à l'échantillonnage de la fonction GXXY au même point.

En règle générale, c'est une fonction gaussienne que l'on utilise pour fonction G, avec l'expression suivante :

$$G = \exp \{ - ( x^2 + y^2 + z^2 ) \}$$

où exp{} désigne la fonction exponentielle.

Encore une autre manière utile de réaliser l'étape 1810 de calcul des différentielles de la fonction F consiste à calculer une approximation de l'image tridimensionnelle IMAGE, sous la forme d'une fonction "SPLINE" tridimensionnelle notée F, constituée du produit tensoriel de trois fonctions polynomiales par morceau.

Les différentielles de la fonction F sont alors des produits tensoriels de fonctions polynomiales, d'ordre inférieur, faciles à calculer à partir de la fonction F elle-même.

Un exemple de réalisation de cette technique est décrit dans :

- "Application des fonctions SPLINE au traitement d'images numériques", Philippe CINQUIN, Thèse de doctorat d'état, spécialité Mathématiques, Université scientifique, technologique et médicale de Grenoble, septembre 1987.
- "Tricubic spline functions, an efficient tool for 3D images modelling", Philippe CINQUIN, Abstract congress ICIAM-1987, International conference on industrial and applied mathematics, Paris, juillet 1987.

Après cette étape 1810 que l'on vient de décrire en différentes variantes, l'étape 1820 consiste en un automate dit CALCULE_COURBURE(). Cet automate reçoit en entrée la structure DIFFER, dont les constituants sont les différentielles de la fonction F jusqu'à l'ordre 3, telles que définies en annexe II.

La première étape de l'automate CALCULE_COURBURES() consiste à calculer le gradient GRAD de la fonction F, qui est le vecteur défini par la formule (I) de l'annexe I. Sur ces formules, il est fait référence à l'ouvrage "Differential Geometry of Curves and Surfaces", Manfredo P. DO CARMO, Prentice-Hall, 1976.

On calcule ensuite sa norme ou module, élevé au carré, selon la formule (II). Les éléments de calcul de sa courbure gaussienne K sont définis par la formule (III). La courbure moyenne A est à son tour définie par la formule (IV).

La formule (V) définit le mode de calcul du discriminant D associé à ces deux courbures, qui sont données par une équation du second degré (obtenue à partir de leur demi-somme A et de leur produit K déjà définis).

Enfin, les formules (VI) et (VII) indiquent comment l'on peut calculer les courbures principales K1 et K2 de la surface définie par l'équation implicite F(x,y,z) = S au voisinage du point P, avec F(P) = S.

Quoique certaines des formules qui viennent d'être invoquées aient déjà été décrites, le Demandeur estime que, dans leur ensemble, ces formules constituent un moyen nouveau pour accéder à des caractéristiques différentielles d'une image tridimensionnelle. Les formules (VIII) à (XIV) venant ci-après sont pour leur part considérées comme inédites.

A partir de là, la courbure principale T1 est définie sous forme de direction par un vecteur, qui lui-même dépend de deux autres vecteurs notés ALPHA et BETA.

Les trois composantes du vecteur ALPHA sont données par les formules (VIII). Les trois composantes du vecteur BETA sont définies par les formules (IX).

Les trois composantes du vecteur T1 sont définies par la formule (X). Elles correspondent à la différence vectorielle entre le vecteur ALPHA et D fois le vecteur BETA, d étant le discriminant déterminé par la formule (V). S'il n'est pas nul, ce vecteur T1 définit la première direction principale de courbure; il est alors normé, c'est-à-dire divisé par son module.

De même, il est calculé un vecteur T2 égal à la somme du vecteur ALPHA et de D fois le vecteur BETA, et ce vecteur T2 est à son tour normé.

Si l'un des deux vecteurs principaux T1 et T2 est nul, alors il peut être remplacé par le produit vectoriel de l'autre vecteur principal (non nul) et du gradient GRAD.

Si les deux vecteurs sont nuls, alors un drapeau ("flag") ERREUR est mis à 1.

Un élément original des formules qui viennent d'être décrites pour le calcul des directions principales est que les axes principaux de l'espace (X, Y, Z) jouent un rôle symétrique dans les formules donnant les deux vecteurs principaux T1 et T2. Plus précisément, les formules de leurs coordonnées suivant Y et suivant Z sont obtenues par permutation circulaire de (X, Y, Z) dans la formule décrivant la coordonnée suivant X.

On s'aperçoit que jusqu'à présent seules les différentielles jusqu'à l'ordre 2 de la fonction F ont été utilisées.

Après avoir ainsi déterminé les vecteurs de direction principale T1 et T2, il est procédé au calcul des différentielles suivant x, y et z des courbures principales en K1 et K2. Ceci s'effectue par différenciation des formules (VI) et (VII), d'où un vecteur GRADK1 = (K1X, R1Y, K1Z) et un autre vecteur GRADK2 = (K2X, K2Y, K2Z), comme indiqué par les formules (XII).

Maintenant, on a fait intervenir les différentielles de la fonction F jusqu'à l'ordre 3 inclus.

Une autre caractéristique particulièrement originale de l'invention consiste à établir des coefficients d'extrêmalité, qui caractérisent les lignes de crête présentes dans une image tridimensionnelle.

Un premier coefficient d'extrêmalité EI est obtenu en réalisant le produit scalaire du vecteur GRADK1 et du vecteur T1, conformément à la formule (XIII).

Un autre coefficient d'extrêmalité E2 est obtenu de même par produit scalaire du vecteur GRADK2 et du vecteur T2, conformément à la formule (XIV).

Les signes des coefficients d'extrémalité EI et de E2 sont directement liés à l'orientation dans l'espace des vecteurs T1 et T2.

Cette technique de travail fonctionne dans la quasi-totalité des cas. Il existe cependant des exceptions très rares où il n'est pas possible de calculer les vecteurs de direction principale T1 et T2. C'est le cas par exemple quand le vecteur gradient GRAD est un vecteur nul, ou bien pour des points dits "ombiliques" (Voir l'ouvrage de DO CARMO) correspondant au cas où les deux courbures principales K1 et K2 sont égales. Dans ces cas, cette impossibilité est matérialisée en mettant le drapeau ERREUR de la structure courbure à la valeur 1. Dans tous les autres cas, où les calculs se sont bien déroulés, ce drapeau est mis à zéro.

Quoiqu'il arrive, l'automate CALCULE_COURBURES() fournit une structure COURBURE ainsi remplie, ou bien possédant un drapeau ERREUR à 1. La structure COURBURE est illustrée dans l'annexe 3.

On s'intéressera maintenant à une variante particulièrement importante de l'invention. Elle concerne l'extraction de lignes d'une image, dans le cas particulier où l'on s'intéresse à des lignes de crête.

Les lignes de crête d'une iso-surface d'une image tridimensionnelle sont définies comme étant le passage par zéro du coefficient d'extrêmalité pour cette surface. Les lignes de crête sont donc les bi-iso-lignes dont :

- l'une des iso-surfaces est définie à partir de l'image tridimensionnelle elle-même, et d'un seuil ou iso-valeur S fournie par l'utilisateur;
- l'autre iso-surface est calculée avec comme VALEUR2() le calcul du coefficient d'extrêmalité pour la même image, et un seuil ou iso-valeur associé qui est zéro.

En conséquence, on utilise d'abord l'automate MARCHE_LIGNE() pour une grille tridimensionnelle régulière, avec comme automate de conversion VALEUR1(), la lecture en mémoire du voxel correspondant de l'image tridimensionnelle (éventuellement convertie), et comme premier seuil S1, un seuil S choisi.

L'automate VALEUR2() est alors en fait l'automate servant au calcul de l'extrêmalité E1 par l'automate CALCULE_COURBURE(), avec un seuil S2 = 0.

Cependant, cet automate CALCULE_COURBURE() nécessite, pour un fonctionnement optimal, qu'il lui soit définit une direction privilégiée de l'espace T. Cette direction ne peut être fixée une fois pour toutes pour tout l'ensemble de la mise en oeuvre de l'invention sur une image donnée; en effet, si on procède ainsi, cela entraîne des coupures indésirables le long des lignes de crête.

En conséquence, il est estimé préférable d'orienter le calcul de l'extrêmalité à l'aide de la direction de la ligne de crête que l'on est en train de suivre.

Ceci peut être réalisé en modifiant légèrement les automates MARCHE_UNI_LIGNE() et SEGMENTS_POLYEDRE(), de sorte que ces automates acceptent en outre comme entrée l'indication d'une direction privilégiée T dans l'espace.

En ce qui concerne l'automate MARCHE_UNI_LIGNE(), définir cette direction T correspond à passer la direction (P1,P2), en tant que paramètre, au niveau du bloc B210 de la figure 15. De même, on passera la direction (P2,P1) au niveau du bloc B220 de la même figure.

Si aucun segment n'a encore été déterminé, on conserve la direction T qui a été passée comme argument d'entrée de l'automate MARCHE_UNI_LIGNE().

Au moment où l'automate MARCHE_UNI_LIGNE() appelle l'automate SEGMENTS_POLYEDRE(), celui-ci va utiliser la direction T au niveau du bloc 130 de la figure 12, en passant la direction T à l'automate VALEUR2(), qui, dans ce cas, est l'automate EXTRAIT_COURBURES() retournant l'extrémalité El.

L'homme de métier aura également remarqué que l'automate SEGMENTS_POLYEDRE() est aussi utilisé dans l'automate MARCHE_LIGNES(), au niveau du bloc B120 de la figure 14. Dans ce cas, on peut se contenter d'une direction T arbitraire.

Par ailleurs, dans ce mode de travail, on pourra considérer que l'exécution de l'automate MARCHE_UNI_LIGNE() est terminée au niveau du bloc B345 de la figure 16, quand il n'est pas possible de calculer le coefficient d'extrêmalité pour l'un des sommets du voxel considéré. Dans ce cas, concrétisé par le fait que le drapeau ERREUR du champ COURBURE vaut 1, on sort par le bloc B395 de cette même figure 16, en retournant la liste PTR déjà constituée jusqu'à présent.

L'invention s'applique également pour déterminer des lignes "iso-gaussiennes". Dans ce cas, l'entrée est une image tridimensionnelle, accompagnée de deux seuils S1 et S2. L'automate VALEUR1() correspond simplement à la lecture en mémoire de l'image tridimensionnelle pour déterminer la valeur du voxel correspondant. S1 est le seuil d'iso-valeur définissant l'iso-surface dans l'image tridimensionnelle choisie pour l'utilisateur. Le second automate d'entrée VALEUR2() correspond au calcul de la courbure gaussienne K par l'automate EXTRAIT_COURBURE() déjà cité, et le second seuil S2 est la valeur de l'iso-gaussienne de l'iso-surface que désire l'utilisateur. Les automates SCAN_MAILLE() ou MARCHE_LIGNE() n'ont pas à être modifiés, car le calcul de la courbure gaussienne ne dépend pas d'une orientation dans l'espace, comme c'était le cas pour le coefficient d'extrêmalité des lignes de crête.

Bien entendu, aucun caractère limitatif ne doit être attaché aux deux cas précités d'utilisation conjointe de la technique d'extraction de ligne et des moyens de calcul des caractéristiques différentielles des iso-surfaces, le tout sur une même image.

On peut en envisager de nombreuses variantes. Chaque variante correspond au cas où l'on modifie le mode d'élaboration des automates d'entrée VALEUR1() et VALEUR2() qui peuvent s'attacher soit aux données d'images elles-mêmes, soit à leurs caractéristiques différentielles, soit à toute autre information pouvant avoir un rapport avec l'image considérée.

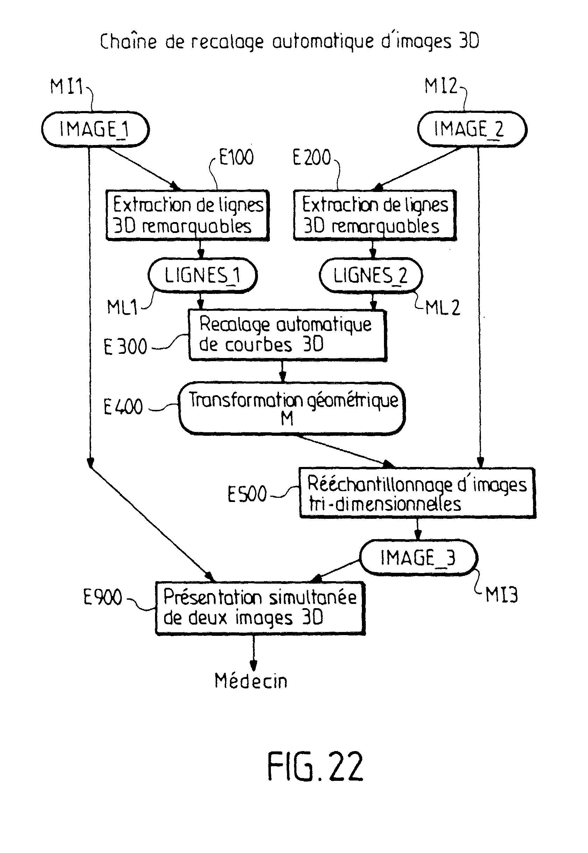

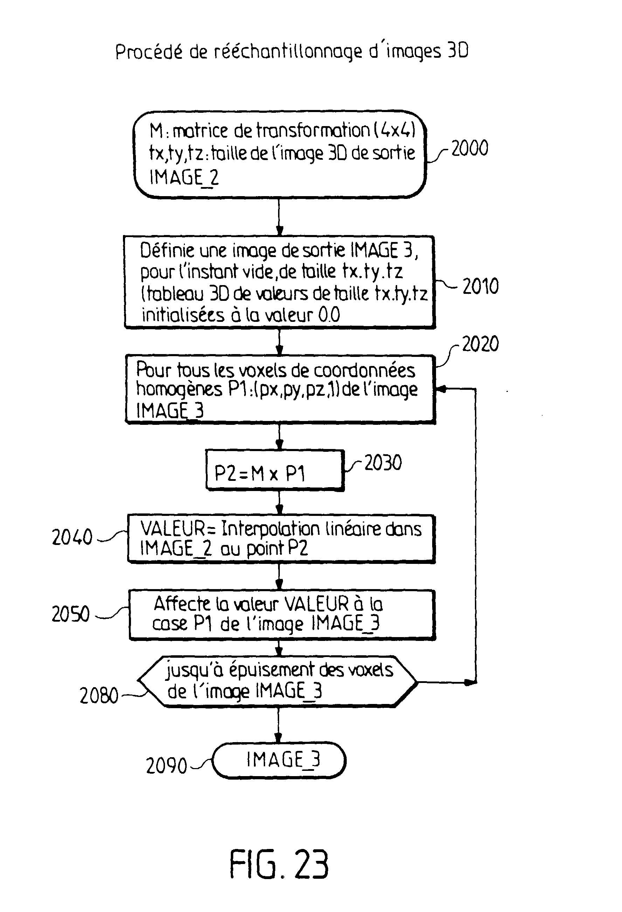

Une autre application importante de l'invention sera maintenant décrite en référence aux figures 22 et 23.

L'invention permet en effet le recalage et le rééchantillonnage de deux images tridimensionnelles IMAGE_1 et IMAGE_2, qui sont relatives à un même sujet, mais pris dans deux positions différentes. Ce peuvent être des images médicales comme celles d'un scanner à rayons X ou celles que l'on obtient en résonance magnétique nucléaire, par exemple.

Le schéma de principe le plus général en est donné sur la figure 2 déjà mentionnée.

Les images IMAGE1 et IMAGE2 sont stockées dans des mémoires MI1 et MI2, et l'on a prévu en attente une mémoire MI3 pour stocker une image intermédiaire.

Sur chacune des deux images MI1 et MI2, on a procédé à la mise en oeuvre de l'invention telle que décrite plus haut, afin d'extraire des lignes tridimensionnelles remarquables de l'image, comme par exemple ces lignes de crête. Ces automates sont schématisés en E100 et E200 sur la figure 22. Il en résulte des données, dans des mémoires de lignes, respectivement stockées en ML1 et ML2.

A partir de là, une autre unité de traitement va procéder au recalage automatique des courbes dans l'espace tridimensionnel que représentent ces deux jeux de lignes. Il s'agit de l'étape E300.

Son but est de fournir en sortie une transformation géométrique propre à permettre le passage de l'un des jeux de lignes à l'autre. On suppose ici qu'il s'agit de la transformation qu'il faut appliquer aux informations LIGNE_2, pour les superposer (sensiblement) au jeu de données LIGNES_1.

De façon générale, une telle transformation peut être décrite sous la forme d'une matrice de taille 4x4, qui donne la transformation en coordonnées homogènes existant de l'un à l'autre des jeux de données. Plus précisément, si l'on note P1 : (P1X, P1Y, P1Z, 1) le vecteur en coordonnées homogènes qui représente la position d'un point dans l'image IMAGE_1, et P2 la position correspondante dans l'image P2, la matrice M est définie alors par :

$$P2 = M \times P1$$

Une technique utilisable pour le recalage de lignes tridimensionnelles est décrite par exemple dans le document "Smoothing and Matching of 3-D Space Curves", André GUEZIEC et Nicolas AYACHE, Rapport de Recherche INRIA No 1544, octobre 1991.

La matrice ainsi déterminée est obtenue à l'étape 400.

On peut alors, de différentes manières, s'en servir pour rapprocher l'une de l'autre, automatiquement ou avec l'intervention d'un opérateur, les informations contenues dans les deux mémoires d'images MI1 et MI2.

On décrira ci-après un exemple d'un tel rapprochement automatique.

Selon cet exemple, l'étape E500 consiste à rééchantillonner l'image tridimensionnelle MI2, compte tenu de la transformation définie par la matrice M.

Sur la figure 23, l'étape d'entrée 2000 consiste à recevoir la matrice de transformation M, ainsi qu'en Tx, Ty et Tz des données fixant la taille de l'image tridimensionnelle désirée en sortie. On a accès aux données dans la mémoire MI2 qui définissent l'image IMAGE_2.

L'étape 2010 de l'automate de rééchantillonnage d'image tridimensionnelle correspond à la préparation d'une image de sortie notée IMAGE_3, et qui est pour l'instant vide avec une taille Tx * Ty * Tz. Cela signifie qu'on prépare un tableau tridimensionnel de valeurs, tableau dont les trois paramètres de taille sont Tx, Ty et Tz, et dont toutes les valeurs sont pour le moment considérées comme nulles.

A l'étape 2020 de l'automate, pour tous les voxels possédant des coordonnées homogènes P1:(Px,Py,Pz,1), de l'image en attente IMAGE_3, on effectue une boucle qui va jusqu'à avoir parcouru tout le tableau à l'étape 2080.

Pour chacun de ces points à calculer de IMAGE_3, l'étape 2030 consiste à déterminer par la relation P2 = M . P1, quel est le point correspondant dans l'image 2.

A l'étape 2040, on détermine par interpolation linéaire dans l'image IMAGE_2, au point P2, quelle est la valeur correspondant à ce point (qui a priori n'a aucune chance de tomber exactement sur un point déjà échantillonné dans IMAGE_2).

L'étape 2050 affecte cette VALEUR qui vient d'être calculée à la case P1 de l'image IMAGE_3.

En fin d'automate, on a à l'étape 2090 rempli la mémoire MI3 avec tous les points de IMAGE_3.

Ceci étant réalisé, l'une des applications les plus simples (figure 22) consiste à effectuer sur un outil de visualisation approprié une présentation simultanée des deux images 3D à l'attention d'un médecin, par exemple par couleurs différentes, ou mieux par un double curseur, les images étant disposées côte à côte.

EXEMPLE PARTICULIER

L'invention a été mise en oeuvre sur une station de travail modèle DEC 5000 (Digital Equipment). Les automates décrits ont été réalisés en langage C, qui permet l'allocation dynamique de mémoire, et l'utilisation de pointeurs.

Une image tridimensionnelle de 64 * 64 * 64 pixels représentant une vue tomographique à rayons X d'un crâne a été prise comme IMAGE_1, en maillage cubique.

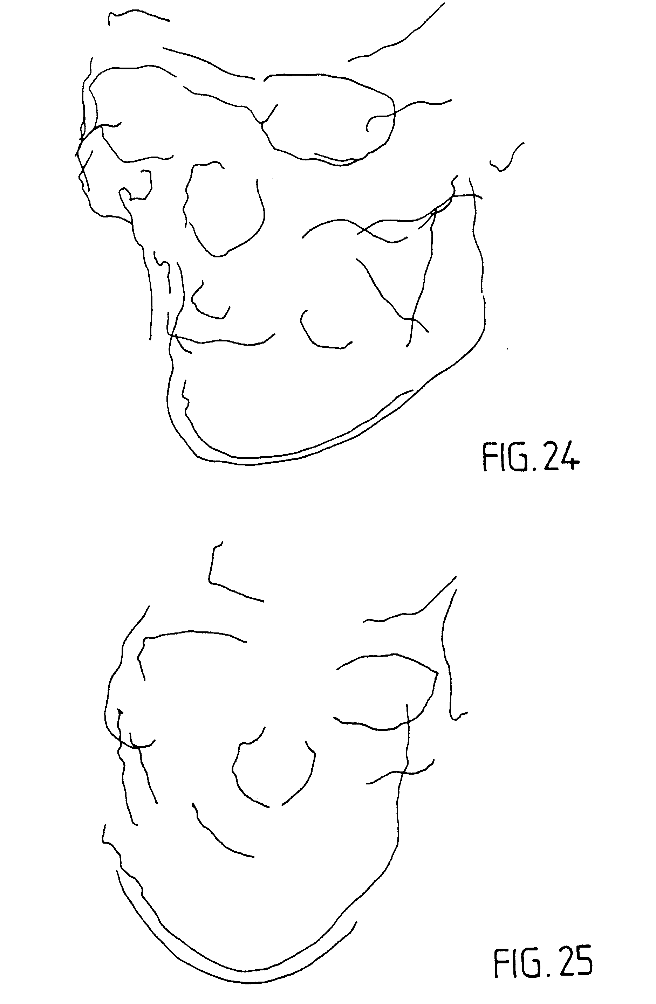

Le résultat (projeté en noir et blanc sur un plan et simplifié par filtrage pour être lisible en plan) est donné sur la figure 24. Malgré cette simplification, on y distingue nettement les grands traits d'un crâne humain. Il est à remarquer que la définition des lignes de crête est largement meilleure que celle de l'image initiale.

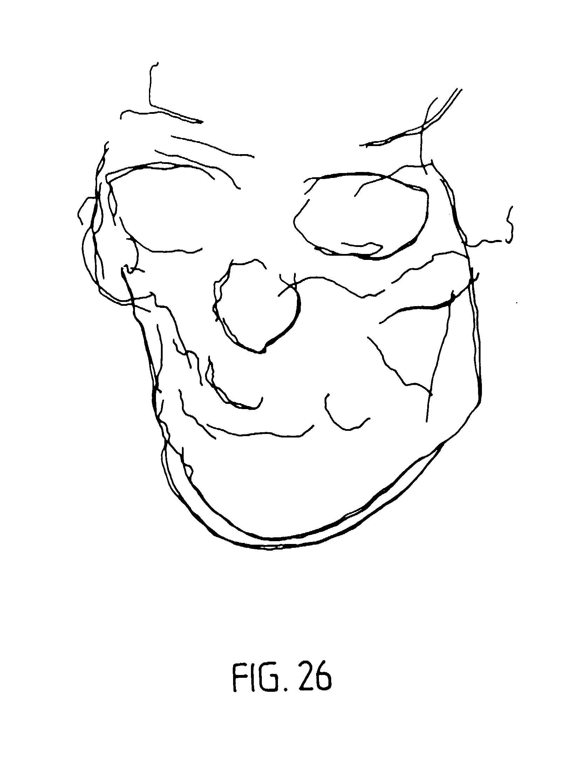

Dans des conditions analogues, la figure 26 montre comment l'on peut superposer automatiquement (à l'aide des lignes de crête et après retraitement de l'une d'entre elles) deux images (figure 24 et 25) du même sujet prises dans des conditions différentes. Ceci était totalement inaccessible avec les moyens de l'état de la technique.

Les moyens proposés selon l'invention sont extrêmement puissants, en ce sens que sans aucune intervention manuelle, le médecin peut par exemple :

- disposer des lignes de crête d'une image tridimensionnelle (l'opération était jusqu'à présent effectuée en dessin à la main, par exemple en chirurgie faciale) ; ou

- disposer d'une comparaison de deux images du même sujet obtenues dans des positions différentes, et ramenées à la même position.

En d'autres termes, on obtient ainsi une chaîne de traitement automatique qui permet de prendre deux images médicales d'un même sujet, mais acquises dans des positions différentes, et de les transformer toujours en deux images du même sujet, mais ramenées à la même position géométrique. Ceci facilite considérablement le diagnostic du médecin. Par exemple, s'il s'agit de deux images du même sujet prises à des temps différents, il peut suivre l'évolution de symptômes d'une maladie. On peut également comparer le même organe de deux patients différents. On peut aussi suivre le déplacement d'un organe au cours du temps.

Dans une autre application, la technique de recalage automatique est utilisée pour comparer et recaler une image médicale tridimensionnelle avec un atlas anatomique, afin d'attribuer un nom à chacune des parties de l'organe examiné, et ceci toujours de manière automatique.

La comparaison d'images relatives à deux sujets différents a également un sens. Après recalage selon la technique décrite, on peut observer les écarts entre lignes qui se correspondent, et calculer des déformations locales entre ces deux jeux de lignes (recalage avec déformation).

**ANNEXE 1-1**

Formules

$$(I) \quad GRAD: (\, FX, FY, FZ \,);$$

$$(II) \quad H = FX^2 + FY^2 + FZ^2;$$

$$(III) \quad K = [\, FX^2 \cdot (FYY \cdot FZZ - FYZ^2) +$$

$$2 \cdot FY \cdot FZ \cdot (FXZ \cdot FXY - FXX \cdot FYZ) +$$

$$FY^2 \cdot (FXX \cdot FZZ - FXZ^2) + 2 \cdot FX \cdot FZ \cdot (FYZ \cdot FXY - FYY \cdot FXZ) +$$

$$FZ^2 \cdot (FXX \cdot FYY - FXY^2) + 2 \cdot FX \cdot FY \cdot (FXZ \cdot FYZ - FZZ \cdot FXY) \,] / H^2;$$

$$(IV) \quad A = [\, FX^2 \cdot (FYY + FZZ) - 2 \cdot FY \cdot FZ \cdot FYZ +$$

$$FY^2 \cdot (FXX + FZZ) - 2 \cdot FX \cdot FZ \cdot FXZ +$$

$$FZ^2 \cdot (FXX + FYY) - 2 \cdot FX \cdot FY \cdot FXY \,] / (2 \cdot H^{3/2});$$

$$(V) \quad D = A^2 - K;$$

$$(VI) \quad K1 = A + D^{1/2};$$

$$(VII) \quad K2 = A - D^{1/2};$$

**ANNEXE 1-2**

$$\text{(VIII)} \quad \text{ALPHA: } (ALPHA_x, ALPHA_y, ALPHA_z)$$

avec

$$ALPHA_x = [\; 2 \cdot FZ^3 \cdot FXY - FY^3 \cdot FZZ - 2 \cdot FY^3 \cdot FXZ + 2 \cdot FY^2 \cdot FZ \cdot FXY - 2 \cdot FZ^2 \cdot FX \cdot FYZ$$

$$- 2 \cdot FZ^2 \cdot FY \cdot FXZ + 2 \cdot FY^2 \cdot FX \cdot FYZ + 2 \cdot FZ \cdot FX \cdot FY \cdot FZZ - 2 \cdot FX \cdot FY \cdot FZ \cdot FYY$$

$$- FY^2 \cdot FZ \cdot FXX + 2 \cdot FZ^2 \cdot FX \cdot FXZ - FZ \cdot FX^2 \cdot FZZ + FX^2 \cdot FZ \cdot FYY$$

$$- 2 \cdot FZ^2 \cdot FY \cdot FYZ + FZ \cdot FY^2 \cdot FZZ - FZ^3 \cdot FXX + FZ^3 \cdot FYY + 2 \cdot FY^2 \cdot FX \cdot FXZ$$

$$- 2 \cdot FX^2 \cdot FY \cdot FYZ + FY^3 \cdot FXX - 2 \cdot FX \cdot FZ^2 \cdot FXY + FY \cdot FZ^2 \cdot FXX$$

$$+ 2 \cdot FZ \cdot FY^2 \cdot FYZ - FY \cdot FZ^2 \cdot FYY + 2 \cdot FZ \cdot FX^2 \cdot FYZ - 2 \cdot FX \cdot FY^2 \cdot FXY$$

$$- FX^2 \cdot FY \cdot FZZ + FX^2 \cdot FY \cdot FYY \;] / (2 \cdot H^{3/2});$$

$$ALPHA_y = [\; - 2 \cdot FZ^3 \cdot FXY + 2 \cdot FZ^2 \cdot FX \cdot FYZ + 2 \cdot FZ^2 \cdot FY \cdot FXZ - 2 \cdot FZ \cdot FX \cdot FY \cdot FZZ$$

$$- FY^2 \cdot FZ \cdot FXX + 2 \cdot FZ^2 \cdot FX \cdot FXZ - FZ \cdot FX^2 \cdot FZZ + FX^2 \cdot FZ \cdot FYY$$

$$- 2 \cdot FZ^2 \cdot FY \cdot FYZ + FZ \cdot FY^2 \cdot FZZ - FZ^3 \cdot FXX + FZ^3 \cdot FYY + 2 \cdot FY^2 \cdot FX \cdot FXZ$$

$$- 2 \cdot FX^2 \cdot FY \cdot FYZ + 2 \cdot FX^3 \cdot FYZ - 2 \cdot FX^2 \cdot FZ \cdot FXY - 2 \cdot FX^2 \cdot FY \cdot FXZ$$

$$+ 2 \cdot FX \cdot FY \cdot FZ \cdot FXX - FX^3 \cdot FYY + 2 \cdot FY \cdot FZ^2 \cdot FXZ + FX \cdot FZ^2 \cdot FXX + FX^3 \cdot FZZ$$

$$- FX \cdot FZ^2 \cdot FYY - 2 \cdot FZ \cdot FY^2 \cdot FXZ - 2 \cdot FZ \cdot FX^2 \cdot FXZ - FX \cdot FY^2 \cdot FXX$$

$$+ FX \cdot FY^2 \cdot FZZ + 2 \cdot FY \cdot FX^2 \cdot FXY \;] / (2 \cdot H^{3/2}); \quad ALPHA_z = [\; - FY^3 \cdot FZZ + 2 \cdot FY^3 \cdot FXZ - 2 \cdot FY^2 \cdot FZ \cdot FXY - 2 \cdot FY^2 \cdot FX \cdot FYZ$$

$$+ 2 \cdot FX \cdot FY \cdot FZ \cdot FYY - 2 \cdot FX^3 \cdot FYZ + 2 \cdot FX^2 \cdot FZ \cdot FXY + 2 \cdot FX^2 \cdot FY \cdot FXZ$$

$$- 2 \cdot FX \cdot FY \cdot FZ \cdot FXX - FX^3 \cdot FYY + 2 \cdot FY \cdot FZ^2 \cdot FXY + FX \cdot FZ^2 \cdot FXX + FX^3 \cdot FZZ$$

$$- FX \cdot FZ^2 \cdot FYY - 2 \cdot FZ \cdot FY^2 \cdot FXZ - 2 \cdot FZ \cdot FX^2 \cdot FXZ - FX \cdot FY^2 \cdot FXX$$

$$+ FX \cdot FY^2 \cdot FZZ + 2 \cdot FY \cdot FX^2 \cdot FXY + FY^3 \cdot FXX - 2 \cdot FX \cdot FZ^2 \cdot FXY + FY \cdot FZ^2 \cdot FXX$$

$$+ 2 \cdot FZ \cdot FY^2 \cdot FYZ - FY \cdot FZ^2 \cdot FYY + 2 \cdot FZ \cdot FX^2 \cdot FYZ - 2 \cdot FX \cdot FY^2 \cdot FXY$$

$$- FX^2 \cdot FY \cdot FZZ + FX^2 \cdot FY \cdot FYY \;] / (2 \cdot H^{3/2});$$

$$\text{(IX)} \quad \text{BETA: } (FZ - FY, FX - FZ, FY - FX);$$

$$\text{(X)} \quad T1:(T1_x, T1_y, T1_z) = ALPHA - D \cdot BETA;$$

$$\text{(XI)} \quad T2:(T2_x, T2_y, T2_z) = ALPHA + D \cdot BETA;$$

**ANNEXE 1-3**

$$\text{(XII)} \quad \text{GRADK1: (K1X,K1Y,K1Z) et GRADK2: (K2X,K2Y,K2Z)}$$

avec

$$\text{K1X}= \partial \text{K1}/\partial x; \quad \text{K1Y}= = \partial \text{K1}/\partial y; \quad \text{K1Z}= = \partial \text{K1}/\partial z;$$
$$\text{K2X}= \partial \text{K2}/\partial x; \quad \text{K2Y}= \partial \text{K2}/\partial y; \quad \text{K2Z}= = \partial \text{K2}/\partial z;$$

$$\text{(XIII)} \quad \text{E1}= \text{K1X}\cdot\text{T1}_x + \text{K1Y}\cdot\text{T1}_y + \text{K1Z}\cdot\text{T1}_z;$$

$$\text{(XIV)} \quad \text{E2}= \text{K2X}\cdot\text{T2}_x + \text{K2Y}\cdot\text{T2}_y + \text{K1Z}\cdot\text{T1}_z;$$

$$\text{(XV)} \quad P= P1 + \frac{(S - V1)}{(V2 - V1)} \cdot \overrightarrow{P1P2}$$

$$\text{(XVI)} \quad P= A1 + u\ A1A2$$

$$(\text{XVII}) \quad P = S1 - v\ \mathbf{B1B2}$$

$$\text{avec:} \quad \begin{pmatrix} u \\ v \end{pmatrix} = \begin{pmatrix} -\overrightarrow{A1A2}^2 & \overrightarrow{A1A2}\cdot\overrightarrow{B1B2} \\ \overrightarrow{A1A2}\cdot\overrightarrow{B1B2} & -\overrightarrow{B1B2}^2 \end{pmatrix}^{-1} \begin{pmatrix} \overrightarrow{A1A2}\cdot\overrightarrow{A1B1} \\ \overrightarrow{B1B2}\cdot\overrightarrow{A1B1} \end{pmatrix}$$

$$\text{(XVIII)} \quad \text{P1: (u1,v1) et P2: (u2,v2)}$$

solutions de:

$$V11 + (V14-V11)\ u + (V12-V11)\ v + (V13+V11-V14-V12)\ uv = S1$$

$$V21 + (V24-V21)\ u + (V22-V21)\ v + (V23+V21-V24-V22)\ uv = S2$$

**ANNEXE 2**

La structure DIFFER est constituée des 20 valeurs:
F,FX,FY,FZ,FXX,FYY,FZZ,FXY,FXZ,FYZ,FXXX,FYYY,FZZZ,FXXY,FXYY,FXYZ,FYYZ, FYZZ,FXXZ et FXZZ.
correspondant différentielles de F jusqu'à l'ordre 3, suivant les conventions suivantes :

Fonction de départ:          F;
différencielles d'ordre 0:    F;
différentielles d'ordre 1:    $FX= \partial F/\partial x$; $FY= \partial F/\partial y$; $FZ= \partial F/\partial z$;
différentielles d'ordre 2:    $FXX= \partial^2 F/\partial x^2$;     $FYY= \partial^2 F/\partial y^2$;       $FZZ= \partial^2 F/\partial z^2$;
                              $FXY= \partial^2 F/\partial x\partial y$;     $FXZ= \partial^2 F/\partial x\partial z$;     $FYZ= \partial^2 F/\partial y\partial z$;
différentielles d'ordre 3:    $FXXX= \partial^3 F/\partial x^3$;     $FYYY= \partial^3 F/\partial y^3$;       $FZZZ= \partial^3 F/\partial z^3$;
                              $FXXY= \partial^3 F/\partial x^2\partial y$;     $FXYY= \partial^3 F/\partial x\partial y^2$;       $FXYZ= \partial^3 F/\partial x\partial y\partial z$;

$$FYYZ = \partial^3 F/\partial y^2 \partial z; \qquad FYZZ = \partial^3 F/\partial y \partial z^2; \qquad FXXZ = \partial^3 F/\partial x^2 \partial z;$$
$$FXZZ = \partial^3 F/\partial x \partial z^2;$$

**ANNEXE 3**

La structure COURBURES peut contenir les valeurs GRAD,K,A,K1,K2,E1,E2, les vecteurs T1 et T2, ainsi que le drapeau ERREUR, avec:

GRAD:    gradient de la fonction F
K:       Courbure gaussienne
A:       Courbure moyenne
K1,K2:   courbures principales
T1,T2:   directions principales de courbures associées
E1,E2:   coefficients d'extrémalité associés
ERREUR: drapeau

**Revendications**

1.  Dispositif électronique pour le traitement d'informations d'image, qui comprend :

    -   des moyens de définition d'image (MI) propres à fournir, en correspondance d'un maillage polyédrique prédéterminé d'une portion de l'espace, une valeur numérique pour chaque sommet du maillage,

    -   des moyens de traitement de polygone (30; 1450; 1650), aptes à recevoir une représentation d'un polygone plan (F) à p sommets, p valeurs respectives pour ces p sommets, et un seuil (S),

    -   des moyens de traitement de polyèdre (20; 1445; 1645) aptes à recevoir une représentation d'un polyèdre (POLYED) avec les valeurs en ses sommets et un seuil, caractérisé en ce que:

    -   lesdits moyens de traitement de polygone sont aptes à fournir, en correspondance du polygone F, une liste de segments orientés reliant des points des arêtes du polygone interpolés comme égaux au seuil, avec une convention de sens prédéterminée, et

    -   lesdits moyens de traitment de polyèdre sont aptes à solliciter les moyens de traitement de polygone (30) pour toutes les faces du polyèdre, ce qui fournit une liste de segments orientés, puis à associer au polyèdre une liste de cycles fermés et orientés, constitués de segments de ladite liste de segments, et en ce que

    -   des moyens de traitement principaux (10; 1440; 1640) sont aptes à présenter séquentiellement une pluralité de polyèdres dudit maillage aux moyens de traitement de polyèdre, avec les valeurs associées à leurs sommets et un seuil,

    les cycles ainsi obtenus appartenant à une iso-surface de l'image pour ladite valeur de seuil.

2.  Dispositif selon la revendication 1, caractérisé en ce que les moyens de traitement principaux (10; 1440; 1640) sont aptes à recevoir deux jeux de valeurs pour les points de ladite portion d'espace, ainsi que deux seuils ou iso-valeurs, et à déterminer des lignes caractéristiques par intersection des deux iso-surfaces correspondantes.

3.  Dispositif selon la revendication 2, caractérisé en ce qu'il comprend en outre :

    -   des moyens d'intersection de cycles (60; 1470; 1670)) aptes à recevoir deux cycles du polyèdre, à rechercher, pour tout couple de segments constructible avec ces deux cycles, si ces segments sont dans la même face du polyèdre, auquel cas est recherchée une intersection de ces deux segments, et le point d'intersection obtenu est retenu, pour constituer finalement une liste de segments orientés,

    et en ce que les moyens de traitement principaux (10; 1440; 1640) sont aptes à présenter séquentiellement deux pluralités de polyèdres dudit maillage aux moyens de traitement de polyèdre, avec les valeurs associées à leurs sommets et un seuil, puis les cycles obtenus aux moyens d'intersection de cycles,

ce qui fournit des lignes remarquables par intersection de deux surfaces iso-valeur.

4. Dispositif selon la revendication 2, caractérisé en ce que les moyens de traitement principaux (10; 1440; 1640) sont aptes à déterminer des lignes remarquables en parcourant chaque cycle fourni, par lesdits moyens de traitement de polyèdre, pour une valeur du premier jeu en chaque point,

à déterminer la valeur du second jeu en chaque sommet d'un cycle,
à rechercher par interpolation, sur les segments du cycle, des points intermédiaires ayant pour valeur du second jeu le second seuil,
et à constituer à partir de ces points des segments orientés, lesquels constituent une représentation approchée desdites lignes remarquables.

5. Dispositif selon l'une des revendications 1 à 4, caractérisé en ce que les moyens de traitement de polygone comprennent :

- un premier automate de base (40) apte à recevoir un couple de points, leurs deux valeurs respectives et un seuil, pour comparer les deux valeurs au seuil, et, si les sens de comparaison sont différents, déterminer un point intermédiaire interpolé proche du seuil, en lui conférant un label lié au sens de la comparaison de l'un prédéterminé des deux points dans le couple,
- un second automate de base (70) propre à recevoir une suite de points formant un cycle, assortis chacun d'un label, à chercher le premier point possédant un label donné (-), et le prendre pour début, à établir un couple ou segment de ce point et du suivant, et à faire la liste de tels segments obtenus avec les autres points du cycle jusqu'à retour au point de début, et
- un premier automate intermédiaire (30), apte à recevoir p points associés à un polygone F, leur p valeurs respectives et un seuil, et, pour chaque arête du polygone, à mettre en oeuvre le premier automate de base (40), en mémorisant dans une zone dite "cycle" les points interpolés éventuels, à boucler ce "cycle" sur lui-même, puis à appeler le second automate de base (70) avec ce cycle bouclé, et à mémoriser la liste de segments orientés ainsi générés en correspondance du polygone F.

6. Dispositif selon la revendication 5, caractérisé en ce que le premier automate de base (40) comporte des moyens (432, 434, 442, 444) réagissant au fait que l'un des points dudit couple possède une valeur proche du seuil, en lui affectant une valeur écartée du seuil d'une manière prédéterminée.

7. Dispositif selon l'une des revendications 5 et 6, caractérisé en ce que les moyens de traitement de polyèdre comprennent :

- un premier automate supérieur (20) apte à recevoir un polyèdre (POLYED), avec les valeurs en ses sommets et le seuil, puis à appeler le premier automate intermédiaire (30) pour toutes les faces du polyèdre, ce qui fournit une liste de segments, puis, tant que cette liste est non vide, à en prendre le premier segment comme début d'un cycle, auquel est ajouté tout segment présentant une extrémité commune avec ledit premier segment, le cycle étant lui-même incorporé à une liste de cycles associée au polyèdre, et ce jusqu'à épuisement de ladite liste de segments.

8. Dispositif selon l'une des revendications 2 à 4, prises en combinaison avec la revendication 7, caractérisé en ce que les moyens d'intersection de cycles comprennent :

- un second automate intermédiaire (80) apte à recevoir deux segments ou couples de points d'une face polygonale F, et une normale orientée N, à établir par calcul de déterminant si les droites support des deux segments se coupent, puis déterminer si l'intersection fait partie des segments, auquel cas elle est retenue comme point P avec un label relié au signe du déterminant, et

- un second automate supérieur (60) apte à recevoir deux cycles du polyèdre, à rechercher, pour tout couple de segments constructible avec ces deux cycles, si ces segments sont dans la même face du polyèdre, auquel cas est appelé le second automate intermédiaire (80), et le point est ajouté dans un cycle, ledit cycle étant rebouclé, puis est appelé le second automate de base, pour donner une liste de segments orientés appartenant à la ligne d'intersection de deux surfaces iso-valeur.

9. Dispositif selon la revendication 8, prise en combinaison avec la revendication 6, caractérisé en ce que les moyens d'intersection de cycles comprennent en outre :

- un troisième automate de base (90) réagissant au fait que l'un des points dans lesdits couples possède une valeur proche du seuil, en lui affectant (910-935) une valeur écartée du seuil d'une autre manière prédéterminée, et en reprenant (940-950) la détermination du point intermédiaire du couple, qui correspond au seuil concerné.

10. Dispositif selon l'une des revendications 1 à 9, caractérisé en ce qu'il comprend des moyens (A1; B1-B3) pour commander l'exploration maille par maille des polyèdres de ladite portion d'espace par les moyens de traitement principaux.

11. Dispositif selon la revendication 10, caractérisé en ce qu'il comprend des moyens (B1-B3) pour commander l'exploration des polyèdres de ladite portion d'espace par les moyens de traitement principaux, en suivant une ligne d'intersection de deux iso-surfaces.

12. Dispositif selon l'une des revendications 1 à 11, dans lequel le maillage comprend une grille parallélipipédique régulière, caractérisé en ce que les moyens de traitement de polygone (1450) comparent directement, pour chaque face en parallélogramme, la configuration des points interpolés égaux au seuil à un jeu de configurations préétablies.

13. Dispositif selon la revendication 12, caractérisé en ce que l'interpolation entre deux sommets d'une face est réalisée en mode hyperbolique.

14. Dispositif selon la revendication 13, prise en combinaison avec la revendication 8, caractérisé en ce que les moyens d'intersection de cycles (1470) déterminent également les points d'intersection par interpolation hyperbolique.

15. Dispositif selon l'une des revendications 1 à 11, dans lequel le maillage comprend une grille tétraédrique, caractérisé en ce que les moyens de traitement de polygone (1650) comparent directement, pour chaque face triangulaire d'un tétraèdre, la configuration des points interpolés égaux au seuil à un. jeu de configurations préétablies.

16. Dispositif selon l'une des revendications 1 à 11, dans lequel le maillage comprend une grille tétraédrique, caractérisé en ce que les moyens de traitement de polyèdre (1645) comparent directement, pour chaque tétraèdre, la configuration des labels des sommets du tétraèdre à un jeu de configurations préétablies.

17. Dispositif selon l'une des revendications 1 à 16, prise en combinaison avec la revendication 2, caractérisé en ce que les deux jeux de valeurs appartiennent à deux images différentes.

18. Dispositif selon l'une des revendications 1 à 16, prise en combinaison avec la revendication 2, caractérisé en ce que l'un des jeux de valeurs appartient à une image, tandis que l'autre correspond à des valeurs différentielles relatives à la même image, ce qui fournit une ou plusieurs lignes remarquables relatives à ladite image.

19. Dispositif selon la revendication 18, caractérisé en ce que les valeurs différentielles appartiennent au groupe comprenant, pour un point échantillonné ou interpolé de l'image:

- le vecteur gradient en ce point,
- la courbure gaussienne en ce point,
- la courbure moyenne en ce point.

20. Dispositif selon l'une des revendications 18 et 19, caractérisé en ce que les valeurs différentielles appartiennent au groupe comprenant, pour un point échantillonné ou interpolé de l'image:

- les courbures principales en ce point,
- les directions principales de courbure en ce point.

21. Dispositif selon l'une des revendications 18 à 20, caractérisé en ce que les valeurs différentielles comprennent les coefficients d'extrémalité en un point échantillonné ou interpolé de l'image.

22. Dispositif selon l'une des revendications 18 à 21, caractérisé en ce qu'il comprend :

- des moyens (E100, ML1) pour extraire des lignes remarquables d'une première image,

- des moyens (ML2) pour définir des lignes remarquables d'une seconde image,

- des moyens (E300, E400) pour déterminer, à partir desdites lignes remarquables, une transformation géométrique (M) faisant passer de l'une des images à l'autre,

- des moyens (E500) pour rééchantillonner avec interpolation (MI3) l'une des images, recalée en les mêmes points que l'autre, en vertu de ladite transformation géométrique, et

- des moyens (E900) pour comparer l'image ainsi rééchantillonnée à ladite autre image.

23. Dispositif selon la revendication 22, caractérisé en ce que lesdits moyens (ML2) utilisent une image de référence des lignes remarquables.

24. Dispositif selon la revendication 22, caractérisé en ce que lesdits moyens (ML2) utilisent une seconde image (MI2) relative au même objet que la première, et comprennent des moyens (E200) pour extraire des lignes remarquables de cette seconde image.

**Patentansprüche**

1. Elektronische Vorrichtung zur Bilddatenverarbeitung, die enthält:

- Bilddefinitionsmittel (MI), die geeignet sind, entsprechend einem vorgegebenen polyedrischen Maschenwerk eines Raumabschnitts einen digitalen Wert für jede Spitze des Maschenwerks zu liefern,

- Polygonverarbeitungsmittel (30; 1450; 1650), die eine Darstellung eines ebenen Polygons (F) mit p Spitzen, p jeweilige Werte für diese p Spitzen sowie einen Schwellenwert (S) empfangen können,

- Polyederverarbeitungsmittel (20; 1445; 1645), die eine Darstellung eines Polyeders (POLYED) mit den Werten an seinen Spitzen sowie einen Schwellenwert empfangen können,

dadurch gekennzeichnet, daß:

- die Polygonverarbeitungsmittel entsprechend dem Polygon F eine Liste orientierter Segmente liefern können, die interpolierte Punkte der Kanten des Polygons, die gleich dem Schwellenwert sind, gemäß einer vorgegebenen Richtungskonvention verbinden, und

- die Polyederverarbeitungsmittel die Polygonverarbeitungsmittel (30) für sämtliche Flächen des Polyeders in Anspruch nehmen können, wodurch eine Liste orientierter Segmente geliefert wird, und dann dem Polyeder eine Liste geschlossener und orientierter Umläufe zuordnen können, die aus Segmenten der Segmentliste gebildet sind, und daß

- Hauptverarbeitungsmittel (10; 1440; 1640) den Polyederverarbeitungsmitteln nacheinander mehrere Polyeder des Maschenwerks mit den ihren Spitzen zugeordneten Werten und einem Schwellenwert liefern können,

wobei die so erhaltenen Umläufe einer Iso-Oberfläche des Bildes für den Schwellenwert zugehören.

2. Vorrichtung nach Anspruch 1, dadurch gekennzeichnet, daß die Hauptverarbeitungsmittel (10; 1440; 1640) zwei Sätze von Werten für die Punkte des Raumabschnitts sowie zwei Schwellenwerte oder Iso-Werte empfangen können und die charakteristischen Linien durch Schneiden der beiden entsprechenden Iso-Oberflächen bestimmen können.

3. Vorrichtung nach Anspruch 2, dadurch gekennzeichnet, daß sie außerdem enthält:

- Umlauf-Schnittmittel (60; 1470; 1670), die zwei Umläufe des Polyeders empfangen können, für jedes Paar von mit diesen beiden Umläufen konstruierbaren Segmenten untersuchen können, ob diese Segmente in derselben Fläche des Polyeders liegen, wobei in diesem Fall ein Schnitt dieser beiden Segmente gesucht wird und der erhaltene Schnittpunkt gehalten wird, um schließlich eine Liste orientierter Segmente zu bilden,

und daß die Hauptverarbeitungsmittel (10; 1440; 1640) den Polyederverarbeitungsmitteln nacheinander zwei Mehrzahlen von Polyedern des Maschenwerks mit den ihren Spitzen zugeordneten Werten sowie einem Schwellenwert und dann die mit den Umlauf-Schnittmitteln erhaltenen Umläufe liefern können,

wodurch die durch Schnitt zweier wertgleicher Oberflächen ausgezeichneten Linien geliefert werden.

4. Vorrichtung nach Anspruch 2, dadurch gekennzeichnet, daß die Hauptverarbeitungsmittel (10; 1440; 1640) die ausgezeichneten Linien bestimmen können, indem sie jeden von den Polyederverarbeitungsmitteln gelieferten Umlauf nach einem Wert des ersten Satzes an jedem Punkt absuchen,

den Wert des zweiten Satzes an jeder Spitze eines Umlaufs bestimmen können,
durch Interpolation in den Segmenten des Umlaufs Zwischenpunkte suchen können, die als Wert des zweiten Satzes den zweiten Schwellenwert besitzen,
und anhand dieser Punkte orientierte Segmente bilden können, die eine angenäherte Darstellung der ausgezeichneten Linien bilden.

5. Vorrichtung nach einem der Ansprüche 1 bis 4, dadurch gekennzeichnet, daß die Polygonverarbeitungsmittel enthalten:

- einen ersten Basisautomaten (40), der ein Punktepaar, ihre jeweiligen Werte und einen Schwellenwert empfangen kann, um die beiden Werte mit dem Schwellenwert zu vergleichen und um, falls die Vergleichsrichtungen unterschiedlich sind, einen interpolierten Zwischenpunkt in der Nähe des Schwellenwerts zu bestimmen, indem sie ihm ein Etikett verleihen, das mit der Vergleichsrichtung eines vorgegebenen der beiden Punkte in dem Paar in Beziehung steht,
- einen zweiten Basisautomaten (70), der eine Folge von Punkten, die einen Umlauf bilden und jeweils mit einem Etikett versehen sind, empfangen kann, den ersten Punkt, der ein gegebenes Etikett (-) besitzt, suchen und ihn als Anfang nehmen kann, ein Paar oder Segment aus diesem Punkt und dem folgenden erstellen kann und die Liste derjenigen Segmente bilden kann, die mit den anderen Punkten des Umlaufs bis zur Rückkehr zum Anfangspunkt erhalten werden, und
- einen ersten Zwischenautomaten (30), der p Punkte, die einem Polygon F zugeordnet sind, ihre jeweiligen p Werte und einen Schwellenwert empfangen kann und für jede Kante des Polygons den ersten Basisautomaten (40) verwenden kann, indem er in einer sogenannten "Umlauf"-Zone die eventuellen interpolierten Punkte speichert, diesen "Umlauf" zu sich selbst zurückschleifen kann, dann den zweiten Basisautomaten (70) mit diesem zurückgeschleiften Umlauf aufrufen kann und die Liste der somit entsprechend dem Polygon F erzeugten orientierten Segmente speichern kann.

6. Vorrichtung nach Anspruch 5, dadurch gekennzeichnet, daß der erste Basisautomat (40) Mittel (432, 434, 442, 444) enthält, die als Antwort auf die Tatsache, daß einer der Punkte des Paars einen Wert in der Nähe des Schwellenwerts besitzt, diesem einen Wert zuweisen, der vom Schwellenwert in einer vorgegebenen Weise beabstandet ist.

7. Vorrichtung nach einem der Ansprüche 5 und 6, dadurch gekennzeichnet, daß die Polyederverarbeitungsmittel enthalten:

- einen ersten oberen Automaten (20), der ein Polyeder (POLYED) mit den Werten an seinen Spitzen und dem Schwellenwert empfangen kann, dann den ersten Zwischenautomaten (30) für alle Flächen des Polyeders aufrufen kann, wodurch eine Segmentliste erhalten wird, dann, sofern diese Liste nicht leer ist, das erste Segment hieraus als Anfang eines Umlaufs nehmen kann, an den jedes Segment angefügt wird, das ein mit dem ersten Segment gemeinsames Ende aufweist, wobei der Umlauf seinerseits in eine dem Polyeder zugeordnete Liste von Umläufen eingefügt wird usw., bis die Segmentliste erschöpft ist.

8. Vorrichtung nach einem der Ansprüche 2 bis 4 in Kombination mit Anspruch 7, dadurch gekennzeichnet, daß die Umlauf-Schnittmittel enthalten:

- einen zweiten Zwischenautomaten (80), der zwei Segmente oder Punktepaare einer Polygonfläche F sowie eine orientierte Normale N empfangen kann, durch Determinantenrechnung feststellen kann, ob sich die Trägergeraden der beiden Segmente schneiden und dann bestimmen kann, ob der Schnitt einen Teil der Segmente bildet, wobei er in diesem Fall als Punkt P mit einem mit dem Vorzeichen der Determinante verbundenen Etikett gehalten wird, und

- einen zweiten oberen Automaten (60), der zwei Umläufe des Polyeders empfangen kann, für jedes mit diesen zwei Umläufen konstruierbare Segmentpaar untersuchen kann, ob diese beiden Segmente in derselben Fläche des Polyeders liegen, wobei in diesem Fall der zweite Zwischenautomat (80) aufgerufen wird und der Punkt einem Umlauf hinzugefügt wird, wobei der Umlauf zurückgeschleift wird, woraufhin der zweite Basisautomat aufgerufen wird, um eine Liste orientierter Segmente zu liefern, die der Schnittlinie der beiden wertgleichen Oberflächen zugehören.

9. Vorrichtung nach Anspruch 8 in Kombination mit Anspruch 6, dadurch gekennzeichnet, daß die Umlauf-Schnittmittel außerdem enthalten:

- einen dritten Basisautomaten (90), der als Antwort auf die Tatsache, daß einer der Punkte in den Paaren einen Wert in der Nähe des Schwellenwerts besitzt, diesem einen Wert zuweist (910-935), der vom Schwellenwert in einer weiteren vorgegebenen Weise beabstandet ist, und die Bestimmung des Zwischenpunkts des Paars, der dem betreffenden Schwellenwert entspricht, wiederaufnimmt (940-950).

10. Vorrichtung nach einem der Ansprüche 1 bis 9, dadurch gekennzeichnet, daß sie Mittel (A1; B1-B3) enthält, um die maschenweise Untersuchung der Polyeder des Raumabschnitts durch die Hauptverarbeitungsmittel zu steuern.

11. Vorrichtung nach Anspruch 10, dadurch gekennzeichnet daß sie Mittel (B1-B3) aufweist, um die Untersuchung der Polyeder des Raumabschnitts durch die Hauptverarbeitungsmittel durch Verfolgung einer Schnittlinie zweier Iso-Flächen zu steuern.

12. Vorrichtung nach einem der Ansprüche 1 bis 11, in der das Maschenwerk ein regelmäßiges Parallelepiped-Gitter enthält, dadurch gekennzeichnet, daß die Polygonverarbeitungsmittel (1450) für jede Parallelogrammfläche die Konfiguration der interpolierten Punkte, die gleich dem Schwellenwert sind, direkt mit einem Satz von im voraus erstellten Konfigurationen vergleichen.

13. Vorrichtung nach Anspruch 12, dadurch gekennzeichnet, daß die Interpolation zwischen zwei Spitzen einer Fläche im hyperbolischen Modus erfolgt.

14. Vorrichtung nach Anspruch 13 in Kombination mit Anspruch 8, dadurch gekennzeichnet, daß die Umlauf-Schnittmittel (1470) auch die Schnittpunkte durch hyperbolische Interpolation bestimmen.

15. Vorrichtung nach einem der Ansprüche 1 bis 11, in der das Maschenwerk ein tetraedrisches Gitter enthält, dadurch gekennzeichnet, daß die Polygonverarbeitungsmittel (1650) für jede Dreieckfläche des Tetraeders die Konfiguration der interpolierten Punkte, die gleich dem Schwellenwert sind, direkt mit einem Satz von im voraus erstellten Konfigurationen vergleichen.

16. Vorrichtung nach einem der Ansprüche 1 bis 11, in der das Maschenwerk ein tetraedrisches Gitter enthält, dadurch gekennzeichnet, daß die Polyederverarbeitungsmittel (1645) für jeden Tetrareder die Konfiguration der Etiketten der Spitzen des Tetraeders direkt mit einem Satz von im voraus erstellten Konfigurationen vergleichen.

17. Vorrichtung nach einem der Ansprüche 1 bis 16 in Kombination mit Anspruch 2, dadurch gekennzeichnet, daß die beiden Sätze von Werten zwei unterschiedlichen Bildern angehören.

18. Vorrichtung nach einem der Ansprüche 1 bis 16 in Kombination mit Anspruch 2, dadurch gekennzeichnet, daß einer der Sätze von Werten einem Bild angehört, während der andere differentiellen Werten desselben Bildes entspricht, woraus sich eine oder mehrere ausgezeichnete Linien für dieses Bild ergeben.

19. Vorrichtung nach Anspruch 18, dadurch gekennzeichnet, daß die differentiellen Werte der Gruppe angehören, die für einen abgetasteten oder interpolierten Punkt des Bildes enthält:

- den Gradientenvektor an diesem Punkt,
- die Gaußsche Krümmung an diesem Punkt,
- die mittlere Krümmung an diesem Punkt.

20. Vorrichtung nach einem der Ansprüche 18 und 19, dadurch gekennzeichnet, daß die differentiellen Werte der Gruppe angehören, die für einen abgetasteten oder interpolierten Punkt des Bildes enthält:

- die Hauptkrümmungen an diesem Punkt,
- die Hauptrichtungen der Krümmung an diesem Punkt.

21. Vorrichtung nach einem der Ansprüche 18 bis 20, dadurch gekennzeichnet, daß die differentiellen Werte die Extremalkoeffizienten an einem abgetasteten oder interpolierten Punkt des Bildes enthalten.

22. Vorrichtung nach einem der Ansprüche 18 bis 21, dadurch gekennzeichnet, daß sie enthält:

- Mittel (E100, ML1) zum Extrahieren der ausgezeichneten Linien eines ersten Bildes,

- Mittel (ML2) zum Definieren der ausgezeichneten Linien eines zweiten Bildes,

- Mittel (E300, E400) zum Bestimmen einer geometrischen Transformation (M) anhand dieser ausgezeichneten Linien, wobei die geometrische Transformation den Übergang eines der Bilder in das andere bewirkt,

- Mittel (E500) zum erneuten Abtasten mit Interpolation (MI3) eines der Bilder, das aufgrund der geometrischen Transformation auf dieselben Punkte wie das andere zurückgeführt ist, und

- Mittel (E900) zum Vergleichen des somit erneut abgetasteten Bildes mit dem anderen Bild.

23. Vorrichtung nach Anspruch 22, dadurch gekennzeichnet, daß die Mittel (ML2) ein Referenzbild ausgezeichneter Linien verwenden.

24. Vorrichtung nach Anspruch 22, dadurch gekennzeichnet, daß die Mittel (ML2) ein zweites Bild (MI2), das auf dasselbe Objekt wie das erste bezogen ist, verwenden und Mittel (E200) zum Extrahieren der ausgezeichneten Linien dieses zweiten Bildes enthalten.

## Claims

1. Electronic device for processing image information, which comprises:

- image definition means (MI) able to provide, in conjunction with a predetermined polyhedral mesh of a portion of space, a numerical value for each vertex of the mesh,
- polygon processing means (30; 1450; 1650), able to receive a representation of a plane polygon (F) with p vertices, p respective values for these p vertices, and a threshold (S),
- polyhedron processing means (20; 1445; 1645) able to receive a representation of a polyhedron (POLYED) with the values at its vertices and a threshold,

characterized in that

- the said polygon processing means are able to provide, in conjunction with the polygon F, a list of oriented segments linking points of the edges of the polygon which are interpolated as being equal to the threshold, with a predetermined sense convention, and
- the said polyhedron processing means are able to invoke the polygon processing means (30) in respect of all the faces of the polyhedron, thus providing a list of oriented segments, then to associate with the polyhedron a list of closed and oriented cycles consisting of segments of the said list of segments, and in that
- main processing means (10; 1440; 1640) are able to present sequentially a plurality of polyhedra of the said mesh to the polyhedron processing means, together with the values associated with their vertices and a threshold,

the cycles thus obtained belonging to an iso-surface of the image for the said threshold value.

2. Device according to Claim 1, characterized in that the main processing means (10; 1440; 1640) are able to receive two sets of values for the points of the said portion of space, as well as two thresholds or iso-values, and to determine characteristic lines by intersection of the two corresponding iso-surfaces.

3. Device according to Claim 2, characterized in that it furthermore comprises:

- cycle intersection means (60; 1470; 1670) able to receive two cycles of the polyhedron, to ascertain, for every pair of segments which can be constructed with these two cycles, whether these segments are in the same face of the polyhedron, in which case an intersection of these two segments is ascertained, and the point of intersection obtained is retained, so as finally to constitute a list of oriented segments,

and in that the main processing means (10; 1440; 1640) are able to present sequentially two pluralities of polyhedra of the said mesh to the polyhedron processing means, together with the values associated with their vertices and a threshold, then the cycles obtained to the cycle intersection means,
thus providing notable lines by intersection of two iso-value surfaces.

4. Device according to Claim 2, characterized in that the main processing means (10; 1440; 1640) are able to determine notable lines by traversing each cycle provided, by the said polyhedron processing means, for a value of the first set at each point,

to determine the value of the second set at each vertex of a cycle,
to ascertain by interpolation, over the segments of the cycle, intermediate points having the second threshold as value of the second set,
and to construct oriented segments from these points, which segments constitute an approximate representation of the said notable lines.

5. Device according to one of Claims 1 to 4, characterized in that the polygon processing means comprise:

- a first basic machine (40) able to receive a pair of points, their two respective values and a threshold, so as to compare the two values with the threshold, and, if the senses of comparison are different, to determine an interpolated intermediate point close to the threshold, by allocating it a label related to the sense of the comparison of a predetermined one of the two points in the pair,
- a second basic machine (70) able to receive a series of points forming a cycle, each accompanied by a label, to search for the first point possessing a given label (-), and take it as start, to establish a pair or segment of this point and the next, and to compile the list of such segments obtained with the other points of the cycle until the start point is returned to, and
- a first intermediate machine (30), able to receive p points associated with a polygon F, their p respective values and a threshold, and, for each edge of the polygon, to implement the first basic machine (40), by storing any interpolated points in a so-called "cycle" area, to loop this "cycle" back on itself, then to call the second basic machine (70) with this looped cycle, and to store the list of oriented segments thus generated in conjunction with the polygon F.

6. Device according to Claim 5, characterized in that the first basic machine (40) comprises means (432, 434, 442, 444) reacting to the fact that one of the points of the said pair possesses a value close to the threshold, by assigning it a value spaced from the threshold in a predetermined manner.

7. Device according to one of Claims 5 and 6, characterized in that the polyhedron processing means comprise:

- a first upper machine (20) able to receive a polyhedron (POLYED), together with the values at its vertices and the threshold, then to call the first intermediate machine (30) for all the faces of the polyhedron, thus providing a list of segments, then, as long as this list is not empty, to take the first segment thereof as the start of a cycle, to which is appended any segment having an end in common with the said first segment, the cycle being itself incorporated into a list of cycles which is associated with the polyhedron, so doing until the said list of segments is exhausted.

8. Device according to one of Claims 2 to 4, taken in combination with Claim 7, characterized in that the cycle intersection means comprise:

- a second intermediate machine (80) able to receive two segments or pairs of points of a polygonal face F, and an oriented normal N, to establish by determinant calculation whether the support lines of the two segments cut one another, then to determine whether the intersection forms part of the segments, in which case it is retained as point P with a label linked to the sign of the determinant, and
- a second upper machine (60) able to receive two cycles of the polyhedron, to ascertain, for every pair of segments which can be constructed with these two cycles, whether these segments are in the same face of the polyhedron, in which case the second intermediate machine (80) is called, and the point is appended to a cycle, the said cycle being looped back, then the second basic machine is called, to yield a list of oriented segments belonging to the line of intersection of two iso-value surfaces.

9. Device according to Claim 8, taken in combination with Claim 6, characterized in that the cycle intersection means furthermore comprise:

- a third basic machine (90) reacting to the fact that one of the points in the said pairs possesses a value close to the threshold, by assigning it (910-935) a value spaced from the threshold in another predetermined manner, and by re-utilizing (940-950) the determination of the intermediate point of the pair, which corresponds to the relevant threshold.

10. Device according to one of Claims 1 to 9, characterized in that it comprises means (A1; B1-B3) for controlling the exploration, mesh cell by mesh cell, of the polyhedra of the said portion of space by the main processing means.

11. Device according to Claim 10, characterized in that it comprises means (B1-B3) for controlling the exploration of the polyhedra of the said portion of space by the main processing means, by following a line of intersection of two iso-surfaces.

12. Device according to one of Claims 1 to 11, in which the mesh comprises a regular parallelepipedal grid, characterized in that the polygon processing means (1450) compare directly, for each parallelogram-like face, the configuration of the points interpolated as equal to the threshold with a set of pre-established configurations.

13. Device according to Claim 12, characterized in that the interpolation between two vertices of a face is carried out in hyperbolic mode.

14. Device according to Claim 13, taken in combination with Claim 8, characterized in that the cycle intersection means (1470) also determine the points of intersection by hyperbolic interpolation.

15. Device according to one of Claims 1 to 11, in which the mesh comprises a tetrahedral grid, characterized in that the polygon processing means (1650) compare directly, for each triangular face of a tetrahedron, the configuration of the points interpolated as equal to the threshold with a set of pre-established configurations.

16. Device according to one of Claims 1 to 11, in which the mesh comprises a tetrahedral grid, characterized in that the polyhedron processing means (1645) compare directly, for each tetrahedron, the configuration of the labels of the vertices of the tetrahedron with a set of pre-established configurations.

17. Device according to one of Claims 1 to 16, taken in combination with Claim 2, characterized in that the two sets of values belong to two different images.

18. Device according to one of Claims 1 to 16, taken in combination with Claim 2, characterized in that one of the sets of values belongs to one image, while the other corresponds to differential values relating to the same image, thus providing one or more notable lines relating to the said image.

19. Device according to Claim 18, characterized in that the differential values belong to the group comprising, for a sampled or interpolated point of the image,

- the gradient vector at this point,
- the gaussian curvature at this point,
- the mean curvature at this point.

**20.** Device according to one of Claims 18 and 19, characterized in that the differential values belong to the group comprising, for a sampled or interpolated point of the image:

- the principal curvatures at this point,
- the principal directions of curvature at this point.

**21.** Device according to one of Claims 18 to 20, characterized in that the differential values comprise the extremality coefficients at a sampled or interpolated point of the image.

**22.** Device according to one of Claims 18 to 21, characterized in that it comprises:

- means (E100, ML1) for extracting notable lines of a first image,
- means (ML2) for defining notable lines of a second image,
- means (E300, E400) for determining, from the said notable lines, a geometrical transformation (M) transferring from one of the images to the other,
- means (E500) for resampling with interpolation (MI3) one of the images, realigned at the same points as the other, by virtue of the said geometrical transformation, and
- means (E900) for comparing the image thus resampled with the said other image.

**23.** Device according to Claim 22, characterized in that the said means (ML2) use a reference image of the notable lines.

**24.** Device according to Claim 22, characterized in that the said means (ML2) use a second image (MI2) relating to the same object as the first, and comprise means (E200) for extracting notable lines of this second image.

FIG.1

FIG.2

FIG. 3A

FIG. 3B

FIG. 3C

FIG. 4

FIG. 4A

500 — CYCLE

70

SEGMENTS CYCLE()

P <- premier point de CYCLE — 510

oui — label "-"? — 515

non

P <- point suivant de CYCLE — 520

P1 <- P — 530

P2 <- point suivant de CYCLE — 540

ajoute (P1,P2) à LISTE — 550

P1 <- point suivant de CYCLE — 560

P1 = P? — non — 570

oui

LISTE — 590

FIG. 5

PCA (+)          PCB (-)
     PC5      PC0
PCF (-)  PC4                    PC1    PCC (+)
        PC3
PCE (+)         PC2
          PCD (-)

FIG. 5A

34

30

polygone F
valeurs associées
seuil S — 300

SEGMENTS POLYGONE() — 310

| pour toutes les arêtes de F |

| ARETE_POINT() | — 320

| point généré-> CYCLE | — 330

335 — dernière arête? — non

oui

| reboucler CYCLE sur lui même | — 340

| SEGMENTS_CYCLE() | — 345

| Pour tous les segments générés associer une référence à F | — 350

liste de segments orientés — 360

## FIG. 6

FIG. 6A

200 — polyèdre POLYED
valeurs associées
seuil S

20

CYCLES POLYEDRE()

205 — pour toute face F de POLYED

210 — SEGMENTS_POLYGONE()

215 — segments générés -> LISTE

218 — dernière face? — non

oui

LISTE vide? — 220

oui        non

225

retirer segment SEG1 de LISTE

ajouter SEG1 à CYCLE — 230

pour tous les segments
SEG2 de LISTE — 240

245 —

SEG1 et SEG2 ont une
extrémité commune? — oui — SEG1 <- SEG2

250

non        non

tous segments considérés? — 255

oui

Ajouter CYCLE à LES_CYCLES
vider CYCLE — 260

liste LES CYCLES — 290

FIG. 7

36

FIG. 7A

FIG. 12 B

FIG.8

FIG.8A

FIG.9

80

800

(A1, A2)
(B1, B2)
F, N

INTER SEGMENTS()

805 — B1 = A1 ou B1 = A2? — non

oui

810 — INTER_DECALE (B1)

815 — B2 = A1 ou B2 = A2? — non

oui

820 — INTER_DECALE (B2)

830 — DELTA <- déterminant

835 — DELTA = 0? — oui

non

840 — P <- [A1, A2] ∩ [B1, B2]

845 — P ∈ [A1, A2] et P ∈ [B1, B2] ? — non

oui

850 — L <- signe (DELTA)

rien — 895

P, L — 890

FIG. 10

60

CYCLE1
CYCLE2
POLYED — 600

INTER CYCLES()

Pour tous segments SEG1
de CYCLE 1 — 610

Pour tous segments SEG2
de CYCLE 2 — 620

630

SEG1 et SEG2 appartiennent
à la même face F ? — non

oui — 640

INTER_SEGMENTS() — 650

point généré -> CYCLE

non — dernier segment de CYCLE2 ? — 651

oui — 654

non — dernier segment de CYCLE1 ?

oui — 660

Reboucler CYCLE sur lui même — 670

SEGMENTS_CYCLE()

Liste de segments orientés — 690

FIG.11

10 ⟋

100 ⟋

( polyèdre POLYED )

SEGMENTS_POLYEDRES()

| VALEUR 1() à tous les sommets | ⟋110

↓

| CYCLES_POLYEDRES() | ⟋120

↓

oui ⟵ ⟨ LES_CYCLES1 vide? ⟩ ⟋125

↓ non

| VALEUR 2() à tous les sommets | ⟋130

↓

| CYCLES_POLYEDRES() | ⟋140

↓

oui ⟵ ⟨ LES_CYCLES 2 vide? ⟩ ⟋145

↓ non

⟋150
| Pour tous cycles de LES_CYCLES 1 |

↓

⟋160
| Pour tous cycles de LES CYCLES 2 |

↓

| INTER_CYCLES() | ⟋170

↓

| Mémoriser les segments | ⟋180

↓

182 ⟋ ⟨ LES_CYCLES 2 épuisé? ⟩ → non

↓ oui

184 ⟋ ⟨ LES_CYCLES 1 épuisé? ⟩ → non

↓ oui

( Liste de segments orientés ) ⟋190

## FIG.12

1000

POLYED — 1005

SEGS_POLYEDRES_BIS()

VALEUR1() à tous les sommets de POLYED — 1010

CYCLES_POLYEDRES() — 1020

oui ◇ LES_CYCLES1 vide ? — 1025

non

VALEUR2() à tous les sommets de POLYED — 1030

Pour tous les cycles CYCLE1 de LES_CYCLES1 — 1040

Pour toutes les arêtes (P1,P2) de CYCLE1, de valeur (V1,V2) obtenues par VALEUR2() — 1050

ARETE_POINT() -> P,L — 1055

P,L -> CYCLE — 1060

1065 ◇ CYCLE1 épuisé? — non

oui

Reboucler CYCLE — 1070

SEGMENTS_CYCLE() — 1075

Mémoriser les segments — 1080

◇ LES_CYCLES1 épuisé? — non

1084

oui

Liste de segments orientés — 1090

FIG.12 A

A10 — 
- maillage polyèdrique M
- VALEUR1(), VALEUR 2()
- seuils S1 et S2

A1

SCAN_MAILLES()

A20 — Pour toutes les mailles

A30 — SEGMENT_POLYEDRES()

A40 — Ecrire les segments générés

A50 — Dernière maille ?  non

oui

A90 — Liste de segments orientés

**FIG.13**

B100 —
liste de mailles M'
maillage polyèdrique M
VALEUR1(), VALEUR 2()
seuils S1 et S2

MARCHE_LIGNES()

B110 — Pour toutes les mailles de M

B120 — SEGMENT_POLYEDRES()

B130 — pour tous les segments générés

B140 — MARCHE_LIGNE()

B150 — ajouter la ligne calculée à LLISTE

B170 — Dernier segment ?  non

oui

B180 — Dernière maille ?  non

oui

B190 — LLISTE

**FIG.14**

B200 — polyèdre POLYED
P1,P2
L1,L2

B2

MARCHE_LIGNE()

B210 — LISTE2 <- MARCHE_UNI_LIGNE()
pour P2,L2

B220 — LISTE1 <- MARCHE_UNI_LIGNE()
pour P1,L1

B230 — renverse l'ordre dans LISTE1

B240 — Attache la fin de LISTE1 au début
de LISTE2 -> LISTE

B250 — trouve dernier point LAST de LISTE

B260 — trouve premier point FIRST de LISTE

B270 — LAST et FIRST appartiennent
au même polyèdre?

non

oui

B280 — attache LAST à FIRST

LISTE — B290

FIG.15

B300 — polyèdre POLYED
point P, L

B3

MARCHE UNI LIGNE()

B305 — PTR <- liste vide

B310 — P déjà dans H?

B320 — rajoute P à la fin de PTR

B322 — rajoute P dans H

B325 — trouve la face F de POLYED contenant P

B330 — trouve la maille POLYED 2 qui partage la face F avec POLYED

B335 — POLYED 2 extérieur au maillage M?

B340 — POLYED <- POLYED 2

B345 — SEGMENTS_POLYEDRE()

B350 — pour tous [P1,P2] générés

B355 — L = "-" ?   non   oui   B364

B362 — P1 = P?   non   non   P2 = P?   B364

B366 — oui   P <- P2   B368 oui   P <- P1

B370 — dernier segment?   non

oui

B390 — PTR        B395 — PTR

FIG.16

SCAN_VOXELS()
1400

MARCHE_LIGNES() 1410

MARCHE_LIGNE() 1420

MARCHE_UNI_LIGNE() 1430

1440 SEGMENTS_VOXEL()

VALEUR1()
VALEUR2()

1445 CYCLES_VOXEL()

INTER_CYCLES_CUBE() 1470

1450 SEGMENTS_CARRE()

SEGMENTS_CYCLE()

ARETE_POINT()

INTER_HYPERBOLES()
1490

INTER_DECALE()

# FIG.17

V11
V21
u1
u2
u
V13
V23

v1
P2
+

v2
P1
−

v
V12
V22
V14
V24

# FIG.17A

47

o représente +, ou encore 1

● représente – , ou encore 0

- sens de parcours
- orientation de la normale
- numérotation des bits

# FIG. 18 A

# FIG. 18 B

FIG.19

FIG.19A

○ représente +, ou encore 1

● représente −, ou encore 0

- sens de parcours
- orientation de la normale
- numérotation des bits

# FIG. 20 A

111 = 7

000 = 0

100 = 4          010 = 2          001 = 1

110 = 6          011 = 3          101 = 5

# FIG. 20 B

IMAGE
P,T — 1800

EXTRAIT COURBURES()

DIFFERENTIELLES() — 1810

CALCULE_COURBURES() — 1820

non ← ERREUR = 0 ? — 1825

oui

non ← |K1| < |K2| ? — 1830

oui

K1 <-> K2
T1 <-> T2
E1 <-> E2 — 1840

non ← T2 . T < 0 ? — 1845

oui

T2 <- -T2
E2 <- -E2 — 1850

non ← det(T1,T2,GRAD) < 0 ? — 1855

oui

T1 <- -T1
E1 <- -E1 — 1860

COURBURES — 1890

FIG. 21

Chaîne de recalage automatique d'images 3D

MI1

IMAGE_1

MI2

IMAGE_2

E100

Extraction de lignes
3D remarquables

E200

Extraction de lignes
3D remarquables

LIGNES_1

ML1

LIGNES_2

ML2

E300

Recalage automatique
de courbes 3D

E400

Transformation géométrique
M

E500

Rééchantillonnage d'images
tri-dimensionnelles

IMAGE_3

MI3

E900

Présentation simultanée
de deux images 3D

Médecin

FIG.22

Procédé de rééchantillonnage d'images 3D

M: matrice de transformation (4x4)
tx,ty,tz: taille de l'image 3D de sortie
IMAGE_2
— 2000

Définie une image de sortie IMAGE 3,
pour l'instant vide, de taille tx.ty.tz
(tableau 3D de valeurs de taille tx.ty.tz
initialisées à la valeur 0.0
— 2010

Pour tous les voxels de coordonnées
homogènes P1:(px,py,pz,1) de l'image
IMAGE 3
— 2020

$P2 = M \times P1$
— 2030

VALEUR= Interpolation linéaire dans
IMAGE_2 au point P2
2040 —

Affecte la valeur VALEUR à la
case P1 de l'image IMAGE_3
2050 —

jusqu'à épuisement des voxels
de l'image IMAGE_3
2080 —

IMAGE_3
2090 —

FIG. 23

FIG.24

FIG.25

FIG. 26